# EUROPEAN PATENT APPLICATION

(11) **EP 1 398 965 A1**
(43) Date of publication of application: **17.03.2004**
(21) Application number: 02707201.6
(22) Date of filing: 28.03.2002
(51) Int. Cl.: H04N 5/92

(54) **AV DATA RECORDING/REPRODUCING APPARATUS AND METHOD AND DISC ON WHICH DATA IS RECORDED BY THE AV DATA RECORDING/REPRODUCING APPARATUS OR METHOD**

(30) Priority: 29.03.2001 JP 2001096561; 30.05.2001 JP 2001161930; 28.09.2001 JP 2001300999
(71) Applicant: Matsushita Electric Industrial Co., Ltd., Kadoma-shi, Osaka-fu, 571-8501 (JP)
(72) Inventor: ITO, Masanori, Moriguchi-shi, Osaka 570-0096 (JP)
(74) Representative: Schorr, Frank, Dr.
(86) International application number: PCT/JP2002/003034
(87) International publication number: WO 2002/080541

(57) **Abstract**

An AV data recording/reproducing apparatus and method capable of reliably reproducing all the frames in the apparatus or via the 1394 interface even when the reproduction start point is in the middle of a file. The apparatus includes a video recording block for recording video data as a video file composed of an MPEG transport packet, and a video reproducing block for recording, immediately before a transport packet containing a GOP header in the video file, a transport packet containing a PAT (program association table) and a transport packet containing a PMT (program map table) and reproducing video data composed of an MPEG transport packet. When reproduction is started at the beginning of the GOP header contained in the video data, the transport packet containing the PAT and the transport packet containing the PMT and after are reproduced.

## Description

### TECHNICAL FIELD

The present invention relates to an AV data recording/reproducing apparatus and a method for the same by which video data and audio data are compressed in real time to be recorded on a recording medium such as an optical disk.

### BACKGROUND ART

As a method for compressing video data at a low bit rate, a system stream that is defined by the MPEG 2 standard (ISO/IEC 13818-1) is available. As the system stream, three types including a program stream, a transport stream and a PES (Packetized Elementary Stream) stream are defined.

Meanwhile, as a video recording medium as a substitute for a magnetic tape, attention is given to a phase change optical disk (e.g., DVD-RAM and MVDISC), MO (a magneto-optical disk) and the like.

For example, as a standard for recording video on a DVD-RAM, the VIDEO RECORDING standard (DVD Specifications for Rewritable/Re-recordable Discs Part 3 VIDEO RECORDING Version 1.0 September 1999) is available. This standard is for recording/reproducing, on a DVD-RAM disk, a video file consisting of a program stream according to the MPEG 2 standard.

In addition, there is another case where a video file consisting of a transport stream according to the MPEG 2 defined by ISO/IEC 13818-1 is recorded on a phase change optical disk. In this case, video data is compressed according to the MPEG 2 defined by ISO/IEC 13818-2, and audio data is compressed, for example, according to the MPEG 2-AAC (Advanced Audio Coding) defined by ISO/IEC 13818-7.

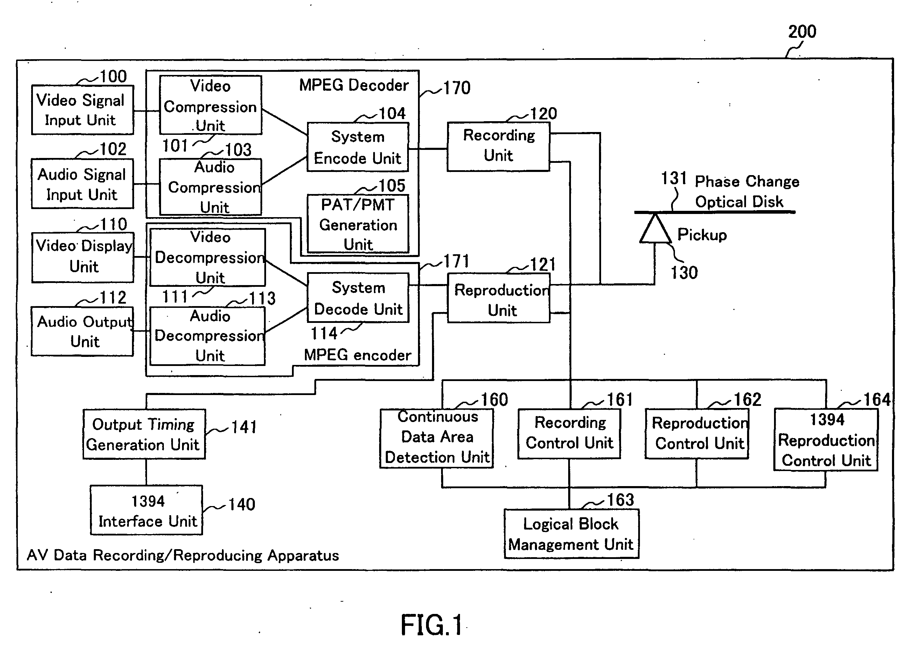

Fig. 1 shows a configuration of a conventional real-time recording/reproducing apparatus for a transport stream using a phase change optical disk. At the time of recording a video signal and an audio signal, the signals input from a video signal input unit 100 and an audio signal input unit 102 are compressed by a video compression unit 101 and an audio compression unit 103, respectively. Next, a system encode unit 104 combines packets including a PAT and a PMT, which are generated by a PAT/PMT generation unit 105, with the compressed video signal and sound signal to generate a transport stream, which is written onto a phase change optical disk 131 by way of a recording unit 120 and a pickup 130. The video compression unit 101, the audio compression unit 103, the system encode unit 104 and the PAT/PMT generation unit 105 make up a MPEG encoder 170.

At the time of reproducing a video signal and an audio signal, a system decode unit 114 separates a transport stream taken out by way of the pickup 130 and a reproduction unit 121 into a video signal and an audio signal. These signals respectively are output to a video display unit 110 and an audio output unit 112 by way of a video decompression unit 111 and an audio decompression unit 113. The video decompression unit 111, the audio decompression unit 113 and the system decode unit 114 make up a MPEG decoder 171.

At the time of recording a video signal and an audio signal, a recording control unit 161 controls the recording unit 120, a continuous data area detection unit 160 and a logical block management unit 163 to carry out the recording. At this time, in accordance with an instruction from the recording control unit 161, the continuous data area detection unit 160 checks into the status of use of sectors that are managed by the logical block management unit 163 to detect a physically continuous space area.

At the time of reproducing a video signal and an audio signal, a reproduction control unit 162 controls the reproduction unit 121 to carry out the reproduction.

When a recorded video file is output to the outside in the isochronous transfer mode by way of an IEEE 1394 interface unit 140, as for a transport stream read out by way of the reproduction unit 121, an output timing generation unit 141 determines a sending timing, and the transport stream is passed to the 1394 interface unit 140 in response to the calculated sending timing.

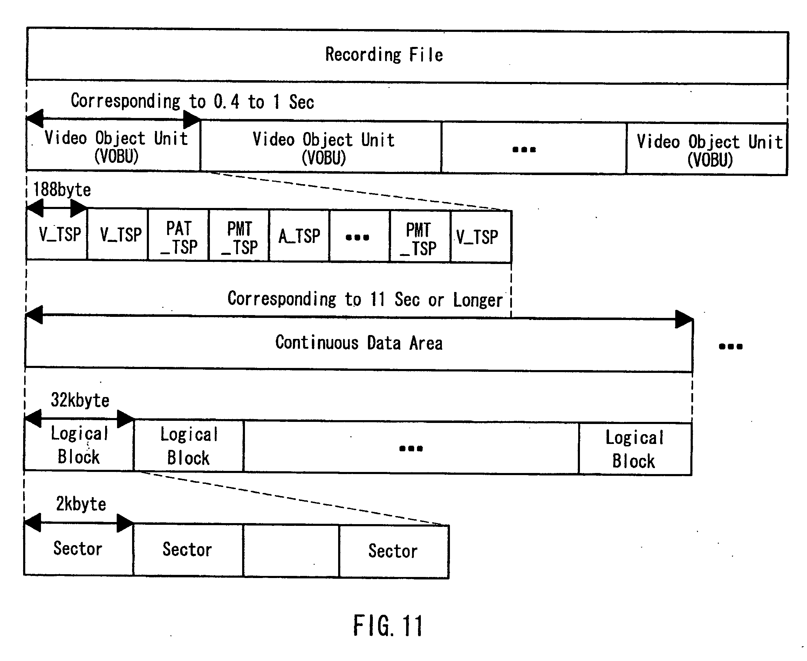

Fig. 11 shows a recording state when video is recorded in real time on the phase change optical disk 131. In Fig. 11, the phase change optical disk is configured with 2-K byte sectors, where sixteen sectors are considered as one logical block. The recording is conducted on the phase change optical disk so that an error correction code is assigned to each logical block.

Furthermore, a physically continuous logical block having a data size corresponding to at least a predetermined time period (e.g., data corresponding to 11 seconds in terms of a maximum recording/reproducing rate) is secured as one continuous data area, and a unit video packet (Video Object Unit, hereinafter referred to as "VOBU") consisting of a MPEG transport stream corresponding to 0.4 to 1 second is recorded sequentially in this area.

One VOBU is configured with transport packets with the unit size of 188 bytes, which are located lower in a hierarchy of a MPEG transport stream. The transport packets are configured with four types of transport packets including: a video transport packet (V_TSP) in which compressed video data is stored; an audio transport packet (A_TSP) in which compressed audio data is stored; a transport packet (PAT_TSP) in which a program association table packet (PAT) is stored; and a transport packet (PMT_TSP) in which a program map table (PMT) is stored.

In addition, one VOBU includes all of the V_TSPs during the time period corresponding to the VOBU. Furthermore, one VOBU includes all of the A_TSPs that include audio frames required in terms of timing. In other words, in one VOBU, audio frames are completed. In addition, in the case of video at a variable bit rate, a data size of one VOBU varies within a range not exceeding the maximum recording/reproducing rate. In the case of video at a fixed bit rate, a data size of a VOBU is kept nearly constant.

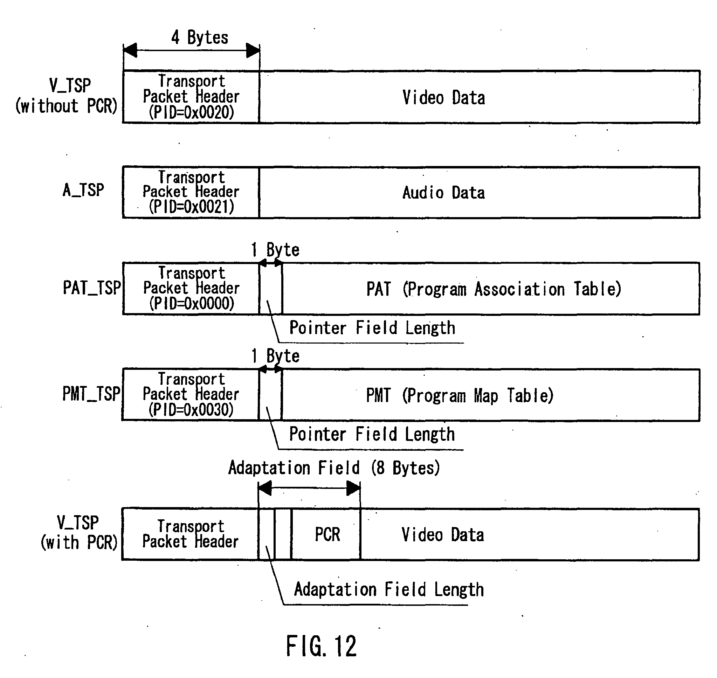

Fig. 12 shows the details of a V_TSP, an A_TSP, a PAT_TSP and a PMT_TSP. As shown in Fig. 12, the V_TSP is configured with a transport packet header and video data, the A_TSP is configured with a transport packet header and audio data, the PAT_TSP is mainly configured with a transport packet header and a program association table, and the PMT_TSP is mainly configured with a transport packet header and a program map table. In addition, when PCR (program clock reference) is added to the V_TSP, a PCR value is recorded as shown in Fig. 12 in an adaptation field adjacent to the transport packet header.

These four types of transport packets including the V_TSP, A_TSP, PAT_TSP and PMT_TSP are identified by a PID (Packet ID) in their transport packet headers. For example, as shown in Fig. 12, the V_TSP is identified by detecting a PID = "0x0020", the A_TSP is identified by detecting a PID = "0x0021", the PAT_TSP is identified by detecting a PID = "0x0000", and the PMT_TSP is identified by detecting a PID = "0x0030".

Here, the allocation state of the PIDs for the V_TSP and the A_TSP is recorded in the program map table in the PMT_TSP. Furthermore, the PID for the PMT_TSP is described in the program association table in the PAT_TSP. Note here that the PID for the PAT_TSP has a fixed value of "0x0000".

The PCR is intended to represent a time when a transport packet arrives at a virtual MPEG decoder by a sample value with 27-MHz clocks. The MPEG 2 standard (ISO/IEC 13818-1) stipulates that this PCR is inserted in a transport packet having a specific PID at an arbitrary timing within at least 100 msec. In addition, recording is conducted as to which PID is selected for adding the PCR in a PCR_PID field in the PMT. This PCR is used for an apparatus on a reception side to input the PCR value into the 27-MHz clock so as to effect a PLL (Phase Lock Loop) and moreover to obtain a reference value of a display timing value and a decoding timing value. That is to say, on the reception side, a value of the PCR is set where the 27-MHz clock is designated as an initial value. Thereafter, by inputting the value of PCR into the PLL, a clock for a transmission side is reproduced. Then, at the timing when the clock value agrees with the display timing value (presentation time stamp or PTS) and a decoding time value (decoding time stamp or DTS) that are included in the video data, the video data is displayed or decoded whereby a procedure for display of the video is carried out. Although the case of audio data is different from video data in that the PTS only is included, the decoding procedure and the output procedure are carried out similarly at the timing agreeing with the PTS.

At the timing when the remaining space in one continuous data area comes to end, the continuous data area detection unit of the AV data recording/reproducing apparatus detects again the next continuous data area. Then, once the one continuous data area becomes full, writing is carried out in the next continuous data area.

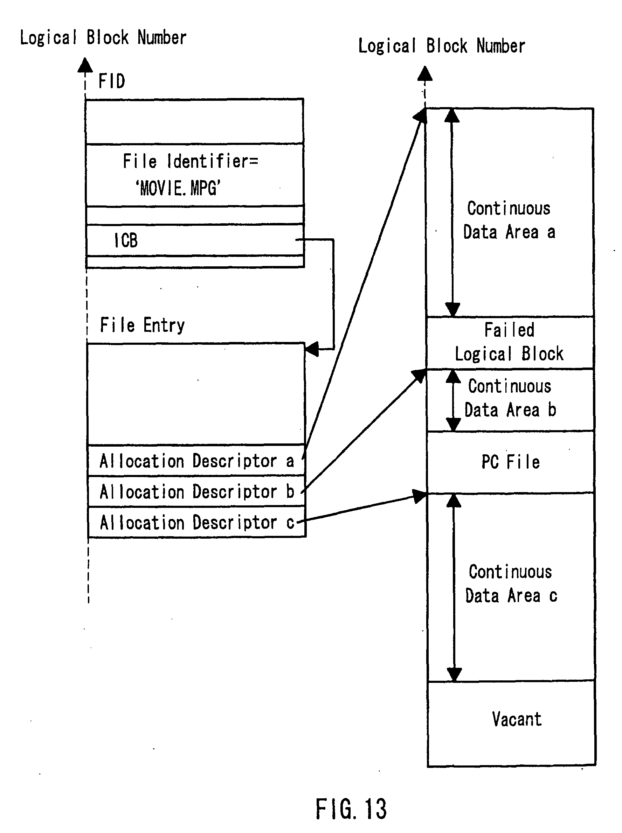

Fig. 13 shows an example of a state where the recorded contents on an optical disc is managed by a UDF (Universal Disk Format) file system. Fig. 13 shows a case where, by each ON and OFF operation of a recording starting button, one MPEG transport stream is recorded as file MOVIE.MPG.

As shown in Fig. 13, a file name and a position of a file entry are managed by a FID (File Identifier Descriptor). In addition, by using allocation descriptors in the file entry, one file and three continuous data areas a, b and c that make up the file are managed.

The following describes a process in which the continuous data area is divided into the three areas. Firstly, when the recording control unit 161 detects a failed logical block during the recording into the continuous data area a, then the failed logical block is skipped and the writing is continued from the beginning of the continuous data area b.

Furthermore, when the recording control unit 161 detects a recording area of a PC file during the recording into the continuous data area b, then the recording area of the PC file is skipped and the writing is continued from the beginning of the continuous data area c. As a result, the file MOVIE.MPG assumes the configuration with the three areas including the continuous data areas a, b and c.

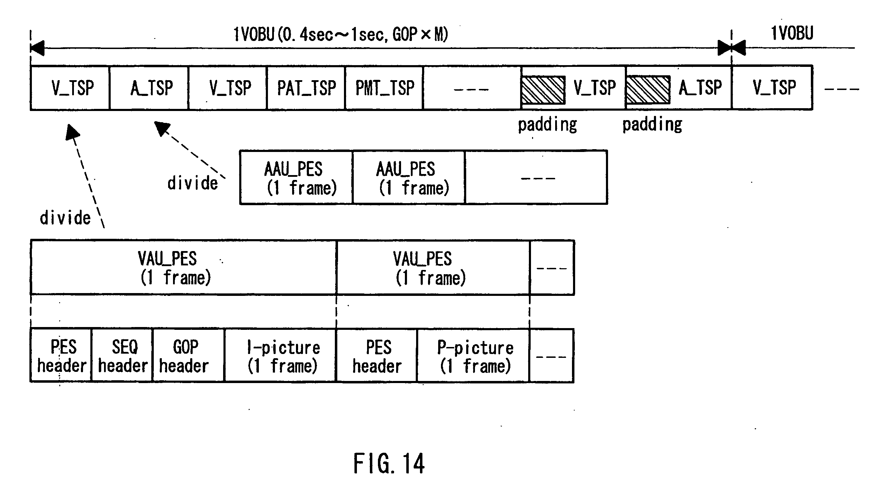

Fig. 14 shows a relationship among a VOBU, a transport packet, a video elementary stream and an audio elementary stream. Here, one VOBU is configured with M pieces of GOPs (Group of Pictures).

Each video frame and each audio header include a PES header for each frame. In addition, one VOBU includes a sequence header at its head. Each GOP includes a GOP header.

Then, in order that the PES header of the leading video or audio in each VOBU begins with the head of a payload of each transport packet, padding is inserted in the immediately preceding transport packet so as to adjust a data size of the transport stream.

In the PAT_TSP and the PMT_TSP, a PID in which video data is stored and a PID in which audio data is stored are stored. Accordingly, if these two PIDs cannot be recognized, video cannot be reproduced.

In addition, in order to control the decoding timing and the output timing with reference to the PTS and the DTS at the time of decoding, the 27-MHz clock value should be initialized quickly to an appropriate value. To this end, there is a need for the MPEG decoder to receive the PCR value as soon as possible so as to start to use the value as the clock value.

However, the MPEG 2 standard (ISO/IEC 13818-1) does not define the insertion timing of the PAT_TSP, the PMT_TSP and the PCR. In addition, while the insertion frequency of the PCR is defined, the insertion frequency of the PAT_TSP and the PMT_TSP is not defined.

Meanwhile, many AV data recording/reproducing apparatus including a disk as a recording medium have a function of reproducing a specific scene of the video in the user's required order. At this time, in order to reproduce the specific scene, the reproduction of the video data generally begins with the head of the sequence header.

However, since there is no stipulation on the insertion timing of the PAT_TSP, the PMT_TSP and the PCR for the V_TSP that includes the head of the sequence header generally functioning as the reproduction starting point, even when the reproduction unit 121 reads out data from the head of the sequence header, if the PAT_TSP and the PMT_TSP have not been read, the system decode unit 114 cannot recognize a V_TSP and an A_TSP so as to refer to their PIDs, resulting in a problem in that a decompression process cannot be started until the PAT_TSP and PMT_TSP are detected.

In this way, in the case where, for example, an I picture immediately after the sequence header cannot be recognized because the PAT_TSP and the PMT_TSP have not been read, the video cannot be displayed before the next sequence header. As a result, typically, video and audio corresponding to 0.5 to 1.0 second cannot be output.

Furthermore, when specific scenes are reproduced while sequentially switching the scenes, there may be a case where a PID registered in a PAT_TSP and a PMT_TSP is different between each scene. In addition, there may be a case where descriptor information contained in a PAT_TSP and a PMT_TSP is different between each scene. In these respects, as for the PAT_TSP and the PMT_TSP, those with appropriate contents should be passed to the MPEG decoder for at least each scene as early as possible.

Particularly, when transmission is conducted using a transfer protocol of a transport stream according to ISO-61883 to a STB (set top box) and a DTV (digital television) that are connected via 1394 interface, the transmission of the PAT_TSP, the PMT_TSP and the PCR becomes important. This is because there is no means for transmitting the used PIDs and the value of the PCR and the like separately from the transport stream.

Meanwhile, when reproduction is conducted using the MPEG decoder of an AV data recording/reproducing apparatus, there is a method for transmitting the used PIDs and the value of the PCR and the like via a different path (e.g., by way of a CPU connected to the MPEG decoder). However, in order to transmit information required for each scene via the different path, there is a need to record information concerning a PID and information of a leading PCR value for each VOBU unit during the recording and to transfer this information to the MPEG decoder before the scene is changed. According to this method, there is a need to record PIDs and a PCR value as management data for the VOBU unit, and therefore the data size is increased. In addition, in the case where reproduction is conducted by a MPEG decoder of an AV data recording/reproducing apparatus concurrently with the output to a 1394 interface so that exactly the same video is reproduced by the both apparatuses, this method is insufficient.

Furthermore, also in the case where a stream stored on a hard disk of a personal computer is reproduced with MPEG reproduction software that runs on the personal computer, there is a problem that, if a PAT_TSP, a PMT_TSP and a PCR are recorded from a midpoint of a scene at the time of starting a specific scene, the video is displayed from the first sequence header after the midpoint. Alternatively, after the detection of the PAT_TSP, the PMT_TSP and the PCR, followed by returning to the reproduction starting point again, then the reproduction should be started. This becomes a cause of the delay in reproduction start and the delay in a change of scenes.

### DISCLOSURE OF THE INVENTION

In order to cope with the above-stated problems, an object of the present invention is to provide an AV data recording/reproducing apparatus and a method for the same by which, even when a midpoint of a file is set as a reproduction starting point, all frames in the designated range can be reproduced easily in equipment, and the same frames can be reproduced by equipment connected via a 1394 interface.

To fulfill the above object, an AV data recording apparatus according to the present invention includes: a video recording unit for recording video data as data composed of continuous unit packets including a MPEG transport packet. In this apparatus, a transport packet including a PAT (program association table) and a transport packet including a PMT (program map table) are recorded at a predetermined interval and at a predetermined position prior to a transport packet including a sequence header in the video data.

With this configuration, when a reproduction starting point that a user can set is set as the head of a VOBU, the head necessarily includes a PAT_TSP and a PMT_TSP even if the head of any of the VOBUs is designated. Therefore, as for all the following transport packets, the discrimination between video data and audio data can be conducted easily, which enables the recording in a recording state by which reliable real time reproducing and displaying can be accomplished.

In addition, in the AV data recording apparatus according to the present invention, preferably the predetermined position is an immediately preceding position. Furthermore, in the AV data recording apparatus according to the present invention, preferably the predetermined interval is between 0.4 second and 1 second, inclusive.

In addition, it is preferable that the AV data recording apparatus according to the present invention further includes a management information recording unit for recording information concerning a recording position of the data, wherein the recording position is a second predetermined position prior to the PAT. Preferably, the second predetermined position is a position of the unit packet immediately before the PAT. Furthermore, in the AV data recording apparatus according to the present invention, preferably the transport packet including the sequence header includes a PCR (program clock reference). When a transport stream is input from the outside, the PAT_TSP, the PMT_TSP and the PCR are necessarily included even if a transport packet including any sequence headers is designated as the reproduction starting point, and therefore as for the following transport stream, reliable real time reproduction can be conducted.

Next, in order to fulfill the above-stated object, an AV data recording apparatus according to the present invention includes: a transport packet input unit; a management information generation unit for generating management information from information contained in the transport packet; and a recording unit for recording the transport packet and the management information. The management information includes positional information of the transport packet that includes at least a part of a sequence header.

In addition, an AV data recording apparatus according to the present invention includes: a transport packet input unit; a management information generation unit for generating management information concerning the transport packet; and a recording unit for recording the transport packet and the management information. The management information includes positional information of the transport packet including a PAT (program association table) that has been input in the recent past traced back from the transport packet including a PMT (program map table) that has been input in the recent past traced back from a transport packet including a PCR that has been input in the recent past with respect to the transport packet including at least a part of a sequence header.

With these configurations, when a transport stream is input from the outside, the PAT_TSP and the PMT_TSP necessarily are included even if a head of any of the VOBUs is designated, and therefore as for all the following transport packets, recording can be conducted in a recording form by which reliable real time reproducing and displaying can be accomplished.

In addition, an AV data recording apparatus according to the present invention includes: a transport packet input unit; a management information generation unit for generating management information concerning the transport packet; and a recording unit for recording the transport packet and the management information. The management information includes positional information of the transport packet that has been input a predetermined time period before the transport packet that includes at least a part of a sequence header.

With this configuration, when a transport stream is input from the outside, the PAT_TSP, the PMT_TSP and the PCR are necessarily included even if a transport packet including any sequence headers is designated as the reproduction starting point, and therefore as for the following transport stream, reliable real time reproduction can be conducted. Furthermore, it is preferable that the predetermined time period is 100 msec or 300 msec.

In addition, an AV data recording apparatus according to the present invention includes: a transport packet input unit; a management information generation unit for generating management information concerning the transport packet; and a recording unit for recording the transport packet and the management information. The management information includes: positional information of the transport packet including a first PMT (program map table) that has been input after the transport packet including at least a part of a sequence header; and positional information of the transport packet including a first PAT (program association table) that has been input after the transport packet including the sequence header.

With this configuration also, when a transport stream is input from the outside, the PAT_TSP and the PMT_TSP necessarily are included even if a head of any of the VOBUs is designated, and therefore as for all the following transport packets, recording can be conducted in a recording form by which reliable real time reproducing and displaying can be accomplished.

In addition, an AV data recording apparatus according to the present invention includes: an audio recording unit for recording audio data as data composed of continuous unit packets including a MPEG transport packet. The audio recording unit records a transport packet including a PAT (program association table) and a transport packet including a PMT (program map table) immediately before transport packets including a predetermined number of audio frames.

With this configuration, when an audio stream is input from the outside, the PAT_TSP and the PMT_TSP necessarily are included even if a head of any AOBUs is designated, and therefore the reproduction can be started securely from the leading audio frame.

In the AV data recording apparatus according to the present invention, preferably the predetermined number of audio frames corresponds to 100 msec or less.

In addition, in the AV data recording apparatus according to the present invention, it is preferable that the transport packet including the sequence header, the transport packet including the PAT (program association table) or the transport packet including the PMT (program association table) includes a PCR (program clock reference).

With this configuration, when a reproduction starting point that a user can set is set as the head of a sequence header, even if the head of any sequence headers is designated, any one of the PAT_TSP, the PMT_TSP and the V_TSP that are located at the head thereof necessarily includes a PCR, and moreover a PTS value and a DTS value that are correctly associated with the PCR value are included in the PES packet.

Therefore, this allows the PCR to be transmitted securely before the PTS and DTS values, and therefore reliable real time reproduction from the first frame in the designated sequence header can be conducted.

Furthermore, in the AV data recording apparatus of the present invention, it is preferable that a part of the sequence header is a first byte or a last byte of a sequence start code. This configuration facilitates the detection of the head of management unit (SOBU described later), when a transport stream input from the outside is recorded.

In addition, in the AV data recording apparatus according to the present invention, it is preferable that, out of the transport packets including the predetermined number of audio frames, the transport packet located at the head thereof includes a PCR (program clock reference).

With this configuration, when a reproduction starting point that a user can set is set as the audio frame units, even if any audio frame is designated, any one of the PAT_TSP, the PMT_TSP and the A_TSP that are located at the head thereof necessarily includes a PCR, and moreover a PTS value that is correctly associated with the PCR value is included in the immediately following PES packet.

Therefore, this allows the PCR to be transmitted securely before the PTS value, and therefore reliable real time reproduction from the first frame in the designated reproduction starting point can be conducted.

In addition, an AV data recording apparatus according to the present invention includes: a transport packet input unit; a management information generation unit for generating management information concerning the transport packet; and a recording unit for recording the transport packet and the management information. The management information includes: positional information of a leading transport packet in a group consisting of a plurality of the transport packets; and input elapsed time information on the group.

This configuration eliminates the detection of a sequence header and the count of the frame number and therefore facilitates the production of the management information.

In addition, an AV data recording apparatus according to the present invention includes: a transport packet input unit; a management information generation unit for generating management information concerning the transport packet; and a recording unit for recording the transport packet and the management information. The management information includes: positional information of a leading transport packet in a group consisting of a plurality of the transport packets; and a PAT (program association table) and a PMT (program map table) that are commonly included in the group.

With this configuration, when a transport stream is input from the outside, even if the head of any groups is designated as the reproduction starting point, the PAT_TSP and the PMT_TSP can be sent out securely and therefore as for the following all transport packets, reliable real time reproduction can be conducted.

In addition, an AV data recording apparatus according to the present invention includes: a transport packet input unit; a management information generation unit for generating management information concerning the transport packet; and a recording unit for recording the transport packet and the management information. The transport packet includes N pieces of video in parallel, and the management information includes: positional information of the transport packet including a sequence header that is included in the N pieces of video.

With this configuration, even in the case where video data on a plurality of tracks is recorded, the same effects as above can be expected.

Furthermore, in the AV data recording apparatus according to the present invention, preferably the management information includes the positional information on the N pieces of video in parallel.

Next, in order to fulfill the above-stated object, an AV data reproducing apparatus according to the present invention includes: a video reproduction unit for reproducing video data composed of unit packets including a MPEG transport packet. The video data includes a transport packet including a PAT (program association table) and a transport packet including a PMT (program map table) at a predetermined position prior to a transport packet including a sequence header. When reproduction is carried out from the sequence header that is included in the video data, the reproduction from the transport packet including the PAT and the transport packet including the PMT and later is carried out.

With this configuration, when a reproduction starting point that a user can set is set as the head of a VOBU, the head necessarily includes a PAT_TSP and a PMT_TSP even if the head of any of the VOBUs is designated. Therefore, as for all the following transport packets, the discrimination between video data and audio data can be conducted easily, which allows reliable real time reproducing and displaying. Note here, it is preferable that the predetermined position is an immediately preceding position.

In addition, an AV data reproducing apparatus according to the present invention includes: a read-out unit for reading out a transport packet and management information concerning the transport packet from a recording medium; and an output unit for starting output with a transport packet including at least a part of a sequence header by referring to the management information. The management information includes positional information of the transport packet including a PAT (program association table) to be output in the recent past traced back from the transport packet including a PMT (program map table) to be output in the recent past traced back from a transport packet including a PCR to be output in the recent past with respect to the sequence header. The read-out unit refers to the positional information in the management information before outputting the transport packet so as to read out the transport packet including the PAT and the transport packet including the PMT. The output unit outputs the transport packet including the PAT, the transport packet including the PMT and the transport packet including the PCR before outputting the transport packet including the sequence header.

With this configuration, as for a transport stream input from the outside, the PAT_TSP and the PMT_TSP necessarily are included even if a head of any of the VOBUs is designated, and therefore as for all the following transport packets, reliable real time reproducing and displaying can be conducted.

In addition, an AV data reproducing apparatus according to the present invention includes: a read-out unit for reading out a transport packet and management information concerning the transport packet from a recording medium; and an output unit for starting output with a transport packet including a sequence header by referring to the management information. The management information includes positional information of the transport packet to be output a predetermined time period before the transport packet including the sequence header. The read-out unit refers to the positional information in the management information before outputting the transport packet so as to read out at least transport packets including a PAT and a PMT that are included in transport packets from the transport packet to be output the predetermined time period before to the transport packet including the sequence header. The output unit outputs the transport packets including the PAT and the PMT before outputting the transport packet including the sequence header.

With this configuration, when a transport stream is input from the outside, the PAT_TSP, the PMT_TSP and the PCR necessarily are included even if a transport packet including any of the sequence headers is designated as the reproduction starting point, and therefore as for the following transport stream, reliable real time reproduction can be conducted.

In addition, an AV data reproducing apparatus according to the present invention includes: a read-out unit for reading out a transport packet and management information concerning the transport packet from a recording medium; and an output unit for starting output with a transport packet including a sequence header by referring to the management information. The management information includes positional information of the transport packet including a first PMT (program map table) to be output after the transport packet including the sequence header and positional information of the transport packet including a first PAT (program association table) to be output after the transport packet including the sequence header. The read-out unit refers to the positional information in the management information so as to read out the transport packet including the PMT and the transport packet including the PAT. The output unit outputs the transport packet including the PAT and the transport packet including the PMT before outputting the transport packet including the sequence header.

With this configuration also, as for a transport stream input from the outside, the PAT_TSP and the PMT_TSP necessarily are included even if a head of any of the VOBUs is designated, and therefore as for all the following transport packets, reliable real time reproducing and displaying can be conducted.

In addition, an AV data reproducing apparatus according to the present invention includes: a read-out unit for reading out a transport packet and management information concerning the transport packet from a recording medium; and an output unit for starting output with a transport packet including a sequence header by referring to the management information. The management information includes positional information of the sequence header. The read-out unit refers to the positional information in the management information so as to read out the transport packets a predetermined number before the transport packet including the sequence header. The output unit carries out a predetermined conversion process with respect to the transport packet including the PAT located at an aftermost position, the transport packet including the PMT located at an aftermost position and a transport packet including a PCR located at an aftermost position out of the transport packets the predetermined number before and then outputs the same before outputting the transport packet including the sequence header.

Alternatively, an AV data reproducing apparatus according to the present invention includes: a read-out unit for reading out a transport packet and management information concerning the transport packet from a recording medium; and an output unit for starting output with a transport packet including a sequence header by referring to the management information. The management information includes positional information of the sequence header. The read-out unit refers to the positional information in the management information so as to read out the transport packets a predetermined number after the transport packet including the sequence header. The output unit carries out a predetermined conversion process with respect to the transport packet including the PAT located at a headmost position, the transport packet including the PMT located at a headmost position and a transport packet including a PCR located at a headmost position out of the transport packets the predetermined number before and then outputs the same before outputting the transport packet including the sequence header.

With these configurations, when a transport stream input from the outside is in conformity with the digital broadcast standard, the PAT_TSP and the PMT_TSP necessarily are included by performing the read-out at an interval according to the insertion frequency, and therefore as for all the following transport packets, reliable real time reproducing and displaying can be conducted.

In addition, an AV data reproducing apparatus according to the present invention includes: an audio reproduction unit for reproducing audio data composed of MPEG transport packets recorded on a recording medium. The audio data includes a transport packet including a PAT (program association table) and a transport packet including a PMT (program map table) at a predetermined position with respect to transport packets including a predetermined number of audio frames. When reproduction is carried out from a head of the audio frames included in the audio data, the reproduction from the transport packet including the PAT and the transport packet including the PMT and later is carried out.

With this configuration, when an audio stream is input from the outside, the PAT_TSP and the PMT_TSP are necessarily included even if a head of any AOBUs is designated, and therefore the reproduction can be started securely from the leading audio frame. Note here that, in the AV data reproducing apparatus, it is preferable that the predetermined position is an immediately preceding position.

In addition, an AV data reproducing apparatus according to the present invention includes: a read-out unit for reading out a transport packet and management information concerning the transport packet from a recording medium; and an output unit for starting output with a transport packet corresponding to a designated output starting time by referring to the management information. The management information includes positional information of a leading transport packet in a group consisting of a plurality of the transport packets and output elapsed time information on the group, and the output unit specifies an output starting position from the designated output starting time by referring to the output elapsed time information and outputs transport packets at the output starting position and later.

This configuration eliminates the detection of a sequence header and the count of the frame number and therefore facilitates the production of the management information.

Alternatively, an AV data reproducing apparatus according to the present invention includes: a read-out unit for reading out a transport packet and management information concerning the transport packet from a recording medium; and an output unit for starting output with a transport packet corresponding to a designated output starting time by referring to the management information. The management information includes positional information of a leading transport packet in a group consisting of a plurality of the transport packets, the number of decoding units included in the group and output elapsed time information on the group, and the output unit specifies an output starting position from the designated output starting time by referring to the number of decoding units or the output elapsed time information and outputs transport packets at the output starting position and later.

With this configuration, even when a transport stream containing a special reproducing video is recorded, the reproduction time and the reproduction starting point can be understood securely by referring to the input elapsed time information or the output elapsed time information.

In addition, an AV data reproducing apparatus according to the present invention includes: a read-out unit for reading out a transport packet and management information concerning the transport packet from a recording medium; and an output unit for starting output with a transport packet corresponding to a designated output starting time by referring to the management information. The management information includes positional information of a leading transport packet in a group consisting of a plurality of the transport packets, the number of decoding units included in the group and output elapsed time information on the group. The output unit compares an output elapsed time calculated by referring to the number of the decoding units and the output elapsed time information, and if a difference in the elapsed time is larger than a predetermined value; specifies an output starting position from the output elapsed time information and outputs transport packets at the output starting position and later.

This configuration allows the firstly reproduced portion to be found precisely based on the precise time management, even when a transport stream for special reproduction and the like is recorded.

In addition, an AV data reproducing apparatus according to the present invention includes: a transport packet input unit; a decoding unit for decoding the input transport packet and outputting the same; and an initialization unit for carrying out initialization of the decoding unit by extracting a PAT (program association table), a PMT (program map table) and a PCR (program clock reference) included in the transport packet. The decoding unit stores the input transport packet until a procedure by the initialization unit has been completed, and, after the completion of the procedure by the initialization unit, starts a decoding procedure with a transport packet after the stored transport packet including the PCR.

With this configuration, real time reproduction from the leading frame of a transport stream input to the AV data reproducing apparatus can be conducted securely.

Next, in order to fulfill the above-stated object, an AV data recording method according to the present invention includes the step of recording video data as data composed of continuous unit packets including a MPEG transport packet. In this method, a transport packet including a PAT (program association table) and a transport packet including a PMT (program map table) are recorded at a predetermined interval and at a predetermined position prior to a transport packet including a sequence header in the video data.

With this configuration, when a reproduction starting point that a user can set is set as the head of a VOBU, the head necessarily includes a PAT_TSP and a PMT_TSP even if the head of any of the VOBUs is designated. Therefore, as for all the following transport packets, the discrimination between video data and audio data can be conducted easily, which enables the recording in a recording state by which reliable real time reproducing and displaying can be accomplished.

Next, in order to fulfill the above-stated object, an AV data recording method according to the present invention includes the steps of: inputting a transport packet; generating management information from information contained in the transport packet; and recording the transport packet and the management information. The management information includes positional information of the transport packet that includes at least a part of a sequence header.

In addition, an AV data recording method according to the present invention includes the steps of: inputting a transport packet; generating management information concerning the transport packet; and recording the transport packet and the management information. The management information includes positional information of the transport packet including a PAT (program association table) that has been input in the recent past traced back from the transport packet including a PMT (program map table) that has been input in the recent past traced back from a transport packet including a PCR that has been input in the recent past with respect to the transport packet including at least a part of a sequence header.

With this configuration, when a transport stream is input from the outside, the PAT_TSP, the PMT_TSP necessarily are included even if a head of any of the VOBUs is designated, and therefore as for all the following transport packets, recording can be conducted in a recording form by which reliable real time reproducing and displaying can be accomplished.

In addition, an AV data recording method according to the present invention includes the steps of: inputting a transport packet; generating management information concerning the transport packet; and recording the transport packet and the management information. The management information includes positional information of the transport packet that has been input a predetermined time period before the transport packet that includes at least a part of a sequence header.

With this configuration, when a transport stream is input from the outside, the PAT_TSP, the PMT_TSP and the PCR necessarily are included even if a transport packet including any of the sequence headers is designated as the reproduction starting point, and therefore as for the following transport stream, reliable real time reproduction can be conducted.

In addition, an AV data recording method according to the present invention includes the steps of: inputting a transport packet; generating management information concerning the transport packet; and recording the transport packet and the management information. The management information includes: positional information of the transport packet including a first PMT (program map table) that has been input after the transport packet including at least a part of a sequence header; and positional information of the transport packet including a first PAT (program association table) that has been input after the transport packet including the sequence header.

With this configuration also, when a transport stream is input from the outside, the PAT_TSP, the PMT_TSP necessarily are included even if a head of any of the VOBUs is designated, and therefore as for all the following transport packets, recording can be conducted in a recording form by which reliable real time reproducing and displaying can be accomplished.

In addition, an AV data recording method according to the present invention includes the step of: recording audio data as data composed of continuous unit packets including a MPEG transport packet. In the step of recording the audio data, a transport packet including a PAT (program association table) and a transport packet including a PMT (program map table) are recorded immediately before transport packets including a predetermined number of audio frames.

With this configuration, when an audio stream is input from the outside, the PAT_TSP and the PMT_TSP necessarily are included even if a head of any of the AOBUs is designated, and therefore the reproduction can be started securely from the leading audio frame.

In addition, an AV data recording method according to the present invention includes the steps of: inputting a transport packet; generating management information concerning the transport packet; and recording the transport packet and the management information. The management information includes: positional information of a leading transport packet in a group consisting of a plurality of the transport packets; and input elapsed time information on the group.

This configuration eliminates the detection of a sequence header and the count of the frame number and therefore facilitates the production of the management information.

In addition, an AV data recording method according to the present invention includes the steps of: inputting a transport packet; generating management information concerning the transport packet; and recording the transport packet and the management information. The management information includes: positional information of a leading transport packet in a group consisting of a plurality of the transport packets; and a PAT (program association table) and a PMT (program map table) that are commonly included in the group.

With this configuration, when a transport stream is input from the outside, the PAT_TSP and the PMT_TSP can be securely sent out even if the head of any of the groups is designated as the reproduction starting point, and therefore as for the following all transport packets, reliable real time reproduction can be conducted.

In addition, an AV data recording method according to the present invention includes the steps of: inputting a transport packet; generating management information concerning the transport packet; and recording the transport packet and the management information. The transport packet includes N pieces of video in parallel, and the management information includes positional information of the transport packet including a sequence header that is included in the N pieces of video.

With this configuration, even in the case where video data on a plurality of tracks is recorded, the same effects as above can be expected.

Next, in order to fulfill the above-stated object, an AV data reproducing method according to the present invention includes the step of: reproducing video data composed of unit packets including a MPEG transport packet. The video data includes a transport packet including a PAT (program association table) and a transport packet including a PMT (program map table) at a predetermined position prior to a transport packet including a sequence header. When reproduction is carried out from the sequence header that is included in the video data, the reproduction from the transport packet including the PAT and the transport packet including the PMT and later is carried out.

With this configuration, when a reproduction starting point that a user can set is set as the head of a VOBU, the head necessarily includes a PAT_TSP and a PMT_TSP even if the head of any of the VOBUs is designated. Therefore, as for all the following transport packets, the discrimination between video data and audio data can be conducted easily, which enables reliable real time reproducing and displaying.

In addition, an AV data reproducing method according to the present invention includes the steps of: reading out a transport packet and management information concerning the transport packet from a recording medium; and starting output with a transport packet including at least a part of a sequence header by referring to the management information. The management information includes positional information of the transport packet including a PAT (program association table) to be output in the recent past traced back from the transport packet including a PMT (program map table) to be output in the recent past traced back from a transport packet including a PCR to be output in the recent past with respect to the sequence header. In the step of reading out the management information, reference is made to the positional information in the management information before outputting the transport packet so as to read out the transport packet including the PAT and the transport packet including the PMT. In the step of starting the output, the transport packet including the PAT, the transport packet including the PMT and the transport packet including the PCR are output before outputting the transport packet including the sequence header.

With this configuration, as for a transport stream input from the outside, the PAT_TSP and the PMT_TSP necessarily are included even if a head of any of the VOBUs is designated, and therefore as for all the following transport packets, reliable real time reproducing and displaying can be conducted.

In addition, an AV data reproducing method according to the present invention includes the steps of: reading out a transport packet and management information concerning the transport packet from a recording medium; and starting output with a transport packet including a sequence header by referring to the management information. The management information includes positional information of the transport packet to be output a predetermined time period before the transport packet including the sequence header. In the step of reading out the management information, reference is made to the positional information in the management information before outputting the transport packet so as to read out at least transport packets including a PAT and a PMT that are included in transport packets from the transport packet to be output the predetermined time period before to the transport packet including the sequence header. In the step of starting the output, the transport packets including the PAT and the PMT are output before outputting the transport packet including the sequence header.

With this configuration, when a transport stream is input from the outside, the PAT_TSP, the PMT_TSP and the PCR necessarily are included even if a transport packet including any of the sequence headers is designated as the reproduction starting point, and therefore as for the following transport stream, reliable real time reproduction can be conducted.

In addition, an AV data reproducing method according to the present invention includes the steps of reading out a transport packet and management information concerning the transport packet from a recording medium; and starting output with a transport packet including a sequence header by referring to the management information. The management information includes positional information of the transport packet including a first PMT (program map table) to be output after the transport packet including the sequence header and positional information of the transport packet including a first PAT (program association table) to be output after the transport packet including the sequence header. In the step of reading out the management information, reference is made to the positional information in the management information so as to read out the transport packet including the PMT and the transport packet including the PAT. In the step of starting the output, the transport packet including the PAT and the transport packet including the PMT are output before outputting the transport packet including the sequence header.

With this configuration also, as for a transport stream input from the outside, the PAT_TSP and the PMT_TSP necessarily are included even if a head of any of the VOBUs is designated, and therefore as for all the following transport packets, reliable real time reproducing and displaying can be conducted.

In addition, an AV data reproducing method according to the present invention includes the steps of: reading out a transport packet and management information concerning the transport packet from a recording medium; and starting output with a transport packet including a sequence header by referring to the management information. The management information includes positional information of the sequence header. In the step of reading out the management information, reference is made to the positional information in the management information so as to read out the transport packets a predetermined number before the transport packet including the sequence header. In the step of starting the output unit, after a predetermined conversion process with respect to the transport packet including the PAT located at an aftermost position, the transport packet including the PMT located at an aftermost position and a transport packet including a PCR located at an aftermost position out of the transport packets the predetermined number before, the transport packets are output before outputting the transport packet including the sequence header.

Alternatively, an AV data reproducing method according to the present invention includes the steps of: reading out a transport packet and management information concerning the transport packet from a recording medium; and starting output with a transport packet including a sequence header by referring to the management information. The management information includes positional information of the sequence header. In the step of reading out the management information, reference is made to the positional information in the management information so as to read out the transport packets a predetermined number after the transport packet including the sequence header. In the step of starting the output unit, after a predetermined conversion process with respect to the transport packet including the PAT located at a headmost position, the transport packet including the PMT located at a headmost position and a transport packet including a PCR located at a headmost position out of the transport packets the predetermined number before, the transport packets are output before outputting the transport packet including the sequence header.

With these configurations, when a transport stream input from the outside is in conformity with the digital broadcast standard, the PAT_TSP and the PMT_TSP necessarily are included by performing the read-out at an interval according to the insertion frequency, and therefore as for all the following transport packets, reliable real time reproducing and displaying can be conducted.

In addition, an AV data reproducing method according to the present invention includes the step of: reproducing audio data composed of MPEG transport packets recorded on a recording medium. The audio data includes a transport packet including a PAT (program association table) and a transport packet including a PMT (program map table) at a predetermined position with respect to transport packets including a predetermined number of audio frames. When reproduction is carried out from a head of the audio frames included in the audio data, the reproduction from the transport packet including the PAT and the transport packet including the PMT and later is carried out.

With this configuration, when an audio stream is input from the outside, the PAT_TSP and the PMT_TSP necessarily are included even if a head of any AOBUs is designated, and therefore the reproduction can be started securely from the leading audio frame.

In addition, an AV data reproducing method according to the present invention includes the steps of: reading out a transport packet and management information concerning the transport packet from a recording medium; and starting output with a transport packet corresponding to a designated output starting time by referring to the management information. The management information includes positional information of a leading transport packet in a group consisting of a plurality of the transport packets and output elapsed time information on the group. In the step of starting the output, an output starting position is specified from the designated output starting time by referring to the output elapsed time information and transport packets at the output starting position and later are output.

This configuration eliminates the detection of a sequence header and the count of the frame number and therefore facilitates the production of the management information.

Alternatively, an AV data reproducing method according to the present invention includes the steps of: reading out a transport packet and management information concerning the transport packet from a recording medium; and starting output with a transport packet corresponding to a designated output starting time by referring to the management information. The management information includes positional information of a leading transport packet in a group consisting of a plurality of the transport packets, the number of decoding units included in the group and output elapsed time information on the group. In the step of starting the output, an output starting position is specified from the designated output starting time by referring to the number of decoding units or the output elapsed time information and transport packets at the output starting position and later are output.

With this configuration, even when a transport stream containing a special reproducing video is recorded, the reproduction time and the reproduction starting point can be understood securely by referring to the input elapsed time information or the output elapsed time information.

In addition, an AV data reproducing method according to the present invention includes the steps of: reading out a transport packet and management information concerning the transport packet from a recording medium; and starting output with a transport packet corresponding to a designated output starting time by referring to the management information. The management information includes positional information of a leading transport packet in a group consisting of a plurality of the transport packets, the number of decoding units included in the group and output elapsed time information on the group. In the step of starting the output, comparison is made between an output elapsed time calculated by referring to the number of the decoding units and the output elapsed time information, and if a difference in the elapsed time is larger than a predetermined value, an output starting position is specified from the output elapsed time information and transport packets at the output starting position and later are output. '

This configuration allows the firstly reproduced portion to be found precisely based on the precise time management, even when a transport stream for special reproduction and the like is recorded.

Furthermore, an AV data reproducing method according to the present invention includes the steps of: inputting a transport packet; decoding the input transport packet and outputting the same; and carrying out initialization of the step of decoding and outputting by extracting a PAT (program association table), a PMT (program map table) and a PCR (program clock reference) included in the transport packet. In the step of decoding and outputting, the input transport packet is stored until a procedure in the step of carrying out the initialization has been completed, and, after the completion of the procedure in the step of carrying out the initialization, a decoding procedure is started with a transport packet after the stored transport packet including the PCR.

With this configuration, real time reproduction from the leading frame of a transport stream input to the AV data reproducing apparatus can be conducted securely.

Next, in order to fulfill the above-stated object, a data structure according to the present invention is composed of continuous unit packets including a MPEG transport packet that includes video data. In this data structure, a transport packet including a sequence header in the video data includes a PCR (program clock reference), and a transport packet including a PAT (program association table) and a transport packet including a PMT (program map table) are included at a predetermined interval and at a predetermined position prior to the transport packet including a sequence header.

In addition, a data structure according to the present invention includes management information concerning a MPEG transport packet containing video data and audio data. The data structure includes positional information of the transport packet including a PAT (program association table) that has been input in the recent past traced back from the transport packet including a PMT (program map table) that has been input in the recent past traced back from a transport packet including a PCR that has been input in the recent past with respect to the transport packet including at least a part of a sequence header.

In addition, a data structure according to the present invention includes management information concerning a MPEG transport packet including input video data and/or audio data. The management information includes positional information of the transport packet that has been input within a predetermined time period.

In addition, a data structure according to the present invention is composed of continuous unit packets including a MPEG transport packet that includes audio data. In this data structure, a transport packet including a PAT (program association table) and a transport packet including a PMT (program map table) are included at a predetermined position prior to transport packets including a predetermined number of audio frames, and a PCR (program clock reference) is included at a predetermined position prior to a head of the transport packets including the predetermined number of audio frames.

In addition, a data structure according to the present invention includes management information concerning a MPEG transport packet including N pieces of video in parallel. The management information includes positional information of the transport packet in which a sequence header that is included in the N pieces of video is stored.

Furthermore, a recording medium according to the present invention, typified by a disk, a memory card and the like is subjected to the recording by means of the above-described AV data recording apparatuses and using the methods. As for the recording media having such configurations also, the same effects can be expected.

### BRIEF DESCRIPTION OF DRAWINGS

Fig. 1 is a block diagram showing a configuration of an AV data recording/reproducing apparatus of Embodiment 1 of the present invention and a conventional AV data recording/reproducing apparatus.
Fig. 2 shows a data configuration of a recording file in the AV data recording/reproducing apparatus according to Embodiment 1 of the present invention.
Fig. 3 is a block diagram showing a configuration of an AV data recording/reproducing apparatus of Embodiment 2 of the present invention.
Fig. 4 shows a data configuration of a recording file in the AV data recording/reproducing apparatus according to Embodiment 2 of the present invention.
Fig. 5 shows a data configuration of a management file in the AV data recording/reproducing apparatus according to Embodiment 2 of the present invention.
Fig. 6 shows a data configuration of management data for each continuous SOBU group according to Embodiment 2 of the present invention.
Fig. 7 shows a data configuration of another management file in the AV data recording/reproducing apparatus according to Embodiment 2 of the present invention.
Fig. 8 shows a data configuration of an audio file in an AV data recording/reproducing apparatus according to Embodiment 3 of the present invention.
Fig. 9 is a block diagram showing a configuration of an AV data reproducing apparatus of Embodiment 4 of the present invention.
Fig. 10 shows a data configuration of a management file in an AV data recording/reproducing apparatus according to Embodiment 5 of the present invention.
Fig. 11 shows a data configuration of a recording file in the conventional AV data recording/reproducing apparatus.
Fig. 12 shows a data configuration of a transport packet.
Fig. 13 shows a data configuration showing a file management state of a recording file in the conventional AV data recording/reproducing apparatus.
Fig. 14 shows a relationship among a VOBU, a transport packet, a video elementary stream and an audio elementary stream in the conventional AV data recording/reproducing apparatus.

### BEST MODE FOR CARRYING OUT THE INVENTION

### Embodiment 1

The following describes an AV data recording/reproducing apparatus according to Embodiment 1 of the present invention, with reference to the drawings. The configuration of the AV data recording/reproducing apparatus according to Embodiment 1 of the present invention is similar to that of Fig. 1, which shows the configuration of the conventional AV data recording/reproducing apparatus. A difference from the conventional example resides in an insertion timing of a PAT_TSP, a PMT_TSP and a PCR by a system encode unit 104.

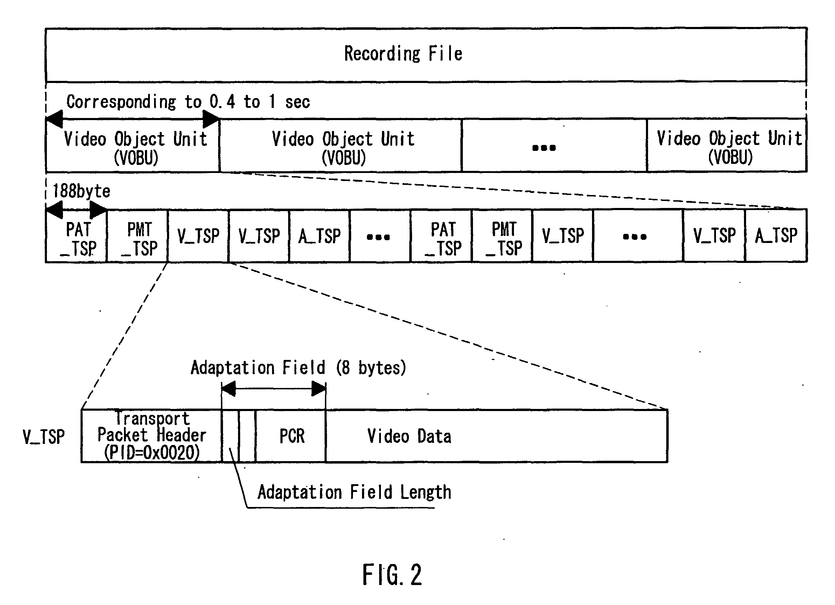

Fig. 2 shows a recording pattern of a recording file in the AV data recording/reproducing apparatus according to Embodiment 1 of the present invention. The recording file is configured with VOBUs that are similar to the conventional one with an exception of a recording position of a PAT_TSP and a PMT_TSP.

In Fig. 2, at the head of each VOBU, a PAT_TSP and a PMT_TSP are necessarily arranged. In addition, in the next transport packet, a V_TSP having a PCR is arranged. Furthermore, PAT_TSPs and PMT_TSPs are inserted in a VOBU so that they are recorded with a frequency within 100 msec according to the specification of the BS digital broadcast of Japan and the specification of digital broadcast of Europe (DVB). More specifically, for example, a PAT_TSP and a PMT_TSP are recorded with a frequency of once every two to three frames. In addition, in a VOBU, a PCR also is recorded at a time interval within 100 msec according to the specification by the MPEG 2 standard (ISO/IEC 13818-1).

With the above-stated configuration, when a reproduction starting point that a user can set is set as the head of a VOBU, the head necessarily includes a PAT_TSP and a PMT_TSP even if the head of any of the VOBUs is designated. Therefore, as for the following all transport packets, the system decode unit 114 can distinguish easily between video data and audio data, which facilitates the division of them between the video decompression unit 111 and the audio decompression unit 113 to be reproduced and displayed. Thereby, all of the designated frames can be displayed without a loss of the designated frames at the time of reproduction starting and at the time of changing in scenes. In addition, since the PCR reaches earlier than a DTS and a PTS that are added to the video, the MPEG decoder can conduct reproduction and displaying while utilizing (referring to) the DTS or the PTS.

In addition, in the case where a transport stream is output to external equipment via a 1394 interface unit 140, even when a user designates the head of any VOBUs as a reproduction starting point, a transport stream with a PAT_TSP and a PMT_TSP as leading packets can be output easily.

Furthermore, although Embodiment 1 describes a file that is managed by the UDF file system, the same effects can be expected even when the file is managed by FAT and other specific file systems.

Note here that, in Embodiment 1, the recording frequency of a PAT_TSP and a PMT_TSP in a VOBU is set at least at once every 100 msec. However, a PAT_TSP and a PMT_TSP may be inserted so that they are arranged with a different frequency according to other standards.

In addition, in Embodiment 1, a PCR is included in the leading V_TSP in a VOBU. However, a transport packet consisting of a PCR only may be recorded between the first V_TSP and PMT_TSP in a VOBU. A PID of this transport packet may be the same as a PID of the V_TSP or a different PID.

### Embodiment 2

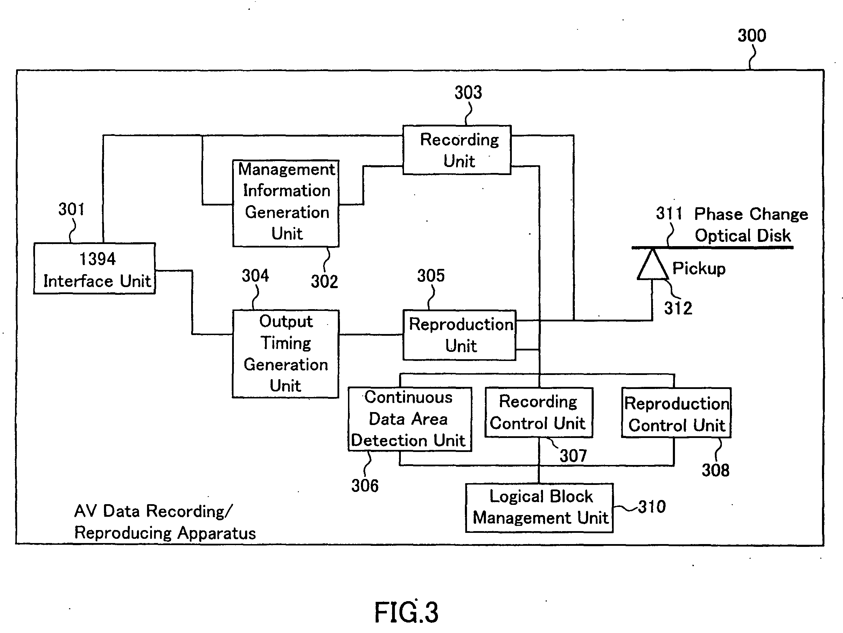

The following describes an AV data recording/reproducing apparatus according to Embodiment 2 of the present invention, with reference to the drawings. Fig. 3 is a block diagram showing a configuration of the AV data recording/reproducing apparatus according to Embodiment 2 of the present invention. In Embodiment 1, as shown in Fig. 1, a transport stream is generated and recorded within the recording/reproducing apparatus, and the transport stream is reproduced within the recording/reproducing apparatus and at the same time the transport stream is output to the outside. However, Embodiment 2 is different from Embodiment 1 in that a transport stream input from the outside is recorded and then the transport stream is output to the outside.

In Fig. 3, firstly at the time of recording, a transport stream is input from a 1394 interface unit 301, and writing is conducted with respect to a phase change optical disk 311 via a recording unit 303 and a pickup 312. At this time, a recording control unit 307 concurrently starts up a continuous data area detection unit 306 to detect a vacant continuous data area that is required for the recording. A logical block management unit 310 receives a notification of a logical block number that is used for the recording from the recording control unit 307, so as to manage the status of use.

In addition, a management information generation unit 302 detects, from the input transport stream, a V_TSP that includes a sequence header and a PES header immediately before the sequence header, a transport packet PAT_TSP that includes a PAT and a transport packet PMT_TSP that includes a PMT, and generates, as management information, a data size between the adjacent V_TSP including the sequence header and the PES header and a time length during the reproduction. The time length during the reproduction is generated with the number of video frames as the unit. In addition, a data size of an I picture immediately after the sequence header also is generated as the management information.

Furthermore, a data size between a transport packet including a PAT that has been input in the recent past traced back from a transport packet including a PMT that has been input in the recent past traced back from a V_TSP including a sequence header and a PES header and a transport packet including the sequence header and the PES header also is generated as the management information with the unit of transport packet number.

As for the input transport packet, the recording control unit 307 starts up the recording unit 303 to write the management information on the phase change optical disk, so as to generate a management file.

On the other hand, at the time of reproducing, firstly a reproduction control unit 308 reads out the management file stored on the phase change optical disk 311 by means of the pickup 312 and a reproduction unit 305. Then, by referring to the management file based on the designated reproduction starting time, the recording position of the corresponding SOBU and the position of the corresponding PAT_TSP are determined, and data of that PAT_TSP and data of the first PMT_TSP included in that position or later and data of the corresponding SOBU or later are read out via the pickup 312 and the reproduction unit 305. In other words, among transport packets that are recorded between that PAT_TSP and the head of the corresponding SOBU, transport packets except for PAT_TSP and PMT_TSP are not output.

In addition, the read-out data is output via an output timing generation unit 304 and the 1394 interface unit 301. In the output timing generation unit 304, by performing buffer simulation of a transport stream target decoder (T_STD) defined by the MPEG 2 system standard (ISO/IEC 13818-1) with respect to the read-out data, an appropriate output timing is calculated. In accordance with this calculated output timing, the read-out data are passed to the 1394 interface unit 301. Then, the 1394 interface unit 301 outputs a transport packet while keeping that timing.

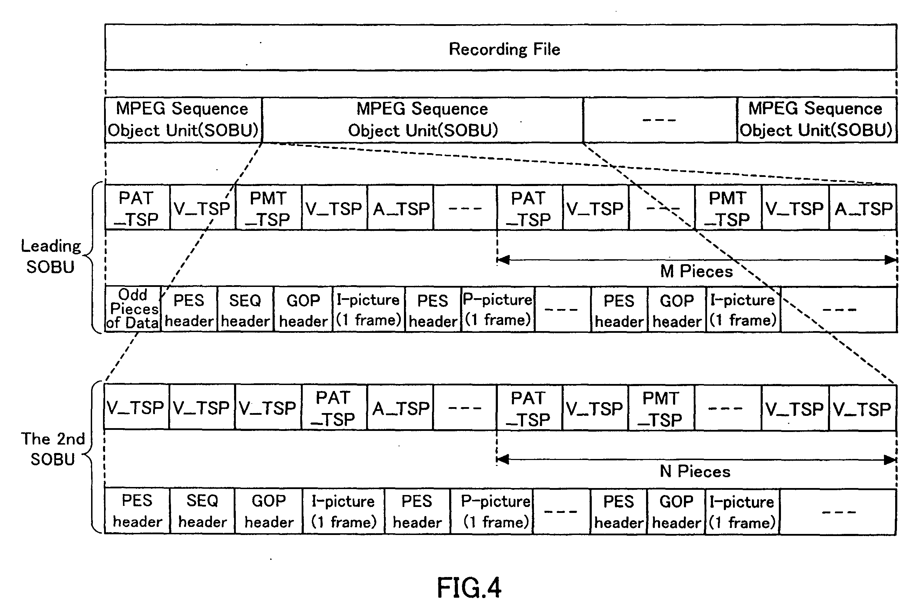

Fig. 4 shows a data configuration of a recording file in the AV data recording/reproducing apparatus according to Embodiment 2 of the present invention. As shown in Fig. 4, the recording file is configured with MPEG Sequence Object Units (hereinafter referred to as "SOBU").

The SOBU in principle includes data from a V_TSP that includes a sequence header of video and the immediately preceding PES header and the preceding packet of a V_TSP that includes the next sequence header and the immediately preceding PES header. Note here that, as an exception, the leading SOBU includes a PAT_TSP at its head. This is because, in Embodiment 2, recording begins with the PAT_TSP. In addition, with this configuration, odd pieces of data are included between the V_TSP including the first sequence header and the PAT_TSP. Furthermore, each SOBU may include a plurality of GOPs.

In addition, in Fig. 4, the position of the PAT_TSP immediately before the last PMT_TSP in the first SOBU is set at the M-th position counted from the end of the SOBU. Furthermore, the second SOBU includes a V_TSP that includes a sequence header and the immediately preceding PES header at its head, and the position of the PAT_TSP immediately before the last PMT_TSP in this SOBU is the N-th position counted from the end of the SOBU.

However, the V_TSP including the sequence header and the immediately preceding PES header does not necessarily include a PES header and a sequence header from the head of its data area (hereinafter referred to as "payload"). This is because the starting position of the sequence header of a transport stream input from the outside cannot be specified.

In an extreme case, for example, there may be a case where a sequence header is arranged across two V_TSPs. In such a case, out of a 4-byte sequence header code (0x000001B3) arranged at the head of the sequence header, the V_TSP including the first byte (0x00) is regarded as the first V_TSP in the SOBU.

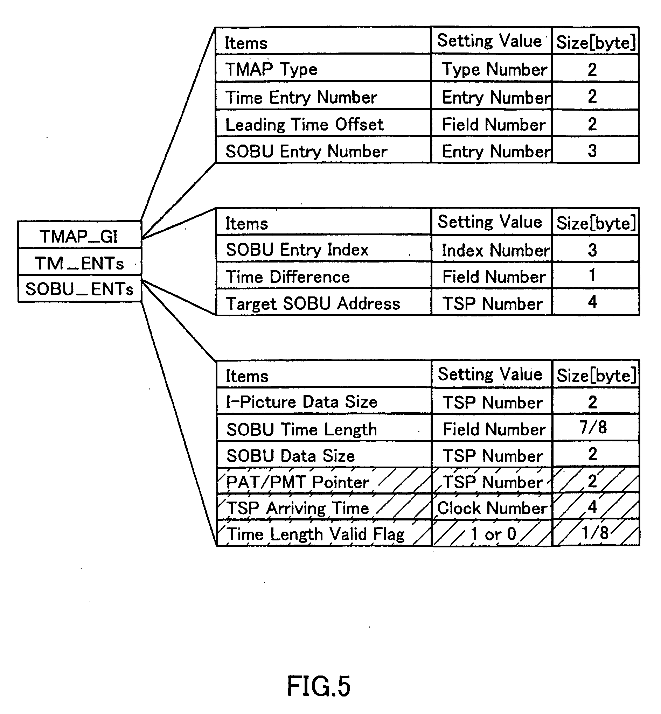

Fig. 5 shows a data configuration of a management file in the AV data recording/reproducing apparatus according to Embodiment 2 of the present invention. As shown in Fig. 5, the management file is configured with a TMAP_GI table, a plurality of TM_ENT tables (TM_ENTs) and a plurality of SOBU_ENT tables (SOBU_ENTs). These three tables keep a relationship of an elapsed time from a time 0 (zero), where the head of the file is set at the time 0, and a recording position of a transport packet corresponding to the time.

First, in the TMAP_GI table, a type number is stored as an identifier of a data configuration of the management file in a TMAP type. In addition, the number of the TM_ENT tables is stored as a time entry number, and the number of the SOBU_ENT tables is stored in a SOBU entry number. Furthermore, in the leading time offset, a value represented by the field number is stored, which indicates how much time has elapsed from the first video frame in the file to a time referred to by the first TM_ENT table.

Next, in the SOBU_ENT table, a data size of an I picture at the head of the SOBU is set in an I-picture data size field with the unit of transport packet number. In addition, a time length required for the display of the SOBU also is set in a SOBU time length field with the unit of field number. Furthermore, a data size of the SOBU is set in a SOBU data size field with the unit of transport packet number. The above-stated configuration is similar to that of the time map information shown in Fig. 11 by JP-3028571.

Furthermore, the position of the PAT_TSP that has been input in the recent past with respect to the last PMT_TSP in the preceding SOBU is set as the packet number from the end of the preceding SOBU in a PAT/PMT pointer field. Furthermore, as for the transport packet constituting two continuous SOBUs, a difference in arriving time of their leading packets in the SOBUs is set in a TSP arriving time field using a counter value by the 27-MHz clock.

Furthermore, as for time length information of the TSP arriving time field and time length information of the SOBU time length field, their units are unified and then are compared. If a difference between them is 1.5 times or more, a time length valid flag field is set at "0", and if the difference is 1.5 times or less, the time length valid flag field is set at "1". When this time length valid flag is "1", it is indicated that the value of the SOBU time length field is valid, and when this time length valid flag is "0", it is indicated that the TSP arriving time field is valid.

In addition, the TM_ENT table stores the position on the recording file that corresponds to reference time at intervals of 10 seconds. That is to say, in the SOBU Entry Index, a consecutive number of the SOBU_ENT table is stored, which corresponds to the SOBU corresponding to the reference time at intervals of 10 seconds. In addition, in Time Difference, a value represented by the unit of field number is stored, which shows a time difference between a video frame corresponding to the reference time at intervals of 10 seconds and the leading frame of the SOBU referred to by the SOBU Entry Index.

Furthermore, in PAT/PMT pointer, in the case of the recording file of Fig. 4, as the PAT/PMT pointers of the SOBU_ENT tables corresponding to the first, the second and the third SOBUs, "0 (zero)", "M" and "N" respectively are stored.

At the time of recording, a transport stream input via the 1394 interface unit 301 is recorded to produce a recording file, and at the same time to produce a management file. However, the TM_ENT and the TMAP_GI are produced by, after the completion of the production of the recording file and the SOBU_ENT, referring to the SOBU_ENT. At this time, if the time length valid flag is "0", reference is made to the TSP arriving time field, which is regarded as the time length of the corresponding SOBU to generate the TM_ENT.

Then, at the time of reproducing, the management file is read out beforehand, and reference is made to the TM_ENT table so as to detect the SOBU_ENT table of the SOBU corresponding to the designated reproduction starting timing. Furthermore, reference is made to the PAT/PMT pointer in the SOBU_ENT table so as to read out a transport packet on the disk from that position, whereby required transport packets are output to the outside.

With the above-stated configuration, as for the data of the SOBU corresponding to the designated reproduction starting time and the following SOBUs, they can be output so as to include the appropriate PAT and PMT. More specifically, even when the head of a specific SOBU is designated as a reproduction starting time, all of the data can be output with the loss of the data required for the reproduction of that SOBU and the following SOBUs. Thereby, as long as the time is designated with the unit of SOBUs, the data can be output at any timing to the external equipment such as DTV and STB connected with the 1394 interface unit 301.

In addition, when the head of a SOBU is detected, a V_TSP including the fourth byte of the sequence header code is detected and management data may be produced by setting the V_TSP as the head of the SOBU. This method can simplify the detection procedure as compared with the case where a V_TSP including the first byte of the PES header immediately before the sequence header code is detected and management data is produced by setting the V_TSP as the head of the SOBU. This is because, if the sequence header or the immediately preceding PES header extends over two V_TSPs, the position of the head of the SOBU should be obtained by detecting the fourth byte of the sequence header and then carrying out the calculation by going back to the preceding V_TSP. At this time, the number of transport packets sandwiched between these two V_TSPs is not constant, so that the number should be calculated each time. Compared with this method, in the method of Embodiment 2, the number of the sandwiched transport packets is "0 (zero)", and therefore there is no need to carry out the calculation each time.

In the case where a V_TSP including the fourth byte is set as the first V_TSP in a SOBU, a V_TSP including the first byte of the sequence header existing between the PAT_TSP designated by the PAT/PMT pointer and the head of the SOBU also should be sent out. Alternatively, a V_TSP including the first byte of the sequence header should be newly generated and inserted. Otherwise, if the head of the payload is 0xB3, then the MPEG decoder on the reception side should regard this as a sequence start code so as to perform the reproduction.

In addition, the provision of the TSP arriving time and the time length valid flag allows the time management using SOBUs in the unit of little less than one second and the time management using the TM_ENT at intervals of 10 seconds to keep appropriate time intervals, even when the input transport stream is a type used for special reproduction. As the transport stream used for special reproduction, for example, there is a case where a transport stream for slow reproduction having a display speed of about 5 frames per second is recorded. In the transport stream in this case, the respective pictures are input sequentially like IBBPBB ···. In this case, the frame number in the SOBU becomes "5", which corresponds to about 1/3 second, and the TSP arriving time becomes one second. With respect to such input also, management can be done as the SOBU corresponding to 1 second that equals the display time length.

On the other hand, there is another case having a transport stream used for high speed reproduction having a display speed of about 5 frames per second. In the transport stream in this case, I pictures are input sequentially like IIII ···. With respect to such input also, management can be done as the SOBU corresponding to one second that equals the display time length.

Note here that, in Embodiment 2, a pointer to the PAT/PMT that has been input in the recent past traced back from the head of the SOBU at the time of recording is registered in the SOBU_ENT. However, a pointer to a PAT and a PMT immediately after the SOBU may be stored. In this case, however, at the time of reproducing, a transport packet that is obtained by subtracting "1" from a Continuity Counter of the PAT and PMT, which is to be referred to and in which the PAT/PMT pointer is stored should be output prior to the SOBU. In addition, also in the case where a program clock reference (PCR) field is included in a transport packet including the PAT or the PMT, this value also should be corrected so as to subtract a value of the time corresponding to the outputting of the PCR value beforehand. Furthermore, in the case the PCR is included, it is desirable that a transport packet including the PCR is sent out separately.

In addition, in Embodiment 2, reference is made to the PAT/PMT pointer of the SOBU_ENT table at the time of reproducing. However, instead of the reference, a predetermined amount of the preceding data of the SOBU may be read out, a search may be conducted from the head of the SOBU toward the direction of the transport packet that has been input in the past, and the firstly detected PMT_TSP and the continuously detected PAT_TSP may be output prior to the SOBU. Particularly, in the case of a transport stream in conformity with the digital broadcast standard, it can be considered that the insertion frequency of the PAT_TSP and the PMT_TSP is defined. Therefore, by reading out a predetermined amount corresponding to this insertion frequency, the PAT_TSP and the PMT_TSP necessarily are included. For example, in the case where they are present with a frequency of 100 msec or less in a 15-Mbps stream, the predetermined amount becomes 187.5 kilobytes. Note here that, needless to say, an additional time for search procedure of the packets is required.

Furthermore, in Embodiment 2, reference is made to the PAT/PMT pointer of the SOBU_ENT table at the time of reproducing. However, instead of the reference, a predetermined amount of the data of the head and the later of the SOBU may be read out and a search may be conducted from the data for a required transport packet, so that transport packets including a PAT_TSP closest to the head of the SOBU, a PMT_TSP closest to the head of the SOBU and a PCR closest to the head of the SOBU are extracted and the data inside of them are changed to be output before the SOBU. Particularly, in the case of a transport stream in conformity with the digital broadcast standard, it can be considered that the insertion frequency of the PAT_TSP and the PMT_TSP is defined. Therefore, by reading out a predetermined amount corresponding to this insertion frequency, the PAT_TSP and the PMT_TSP necessarily are included. For example, in the case where they are present with a frequency of 100 msec or less in a 15-Mbps stream, the predetermined amount becomes 187.5 kilobytes. Note here that, needless to say, an additional time for search procedure of the packets is required.

Note here that, in this case also, a transport packet that is obtained by subtracting "1" from a Continuity Counter of the transport packet including the PAT_TSP, the PMT_TSP and the PCR should be output prior to the SOBU. In addition, in the case where a program clock reference (PCR) field is included in a transport packet including the PAT or the PMT, this value also should be corrected so as to subtract a value of the time corresponding to the outputting of the PCR value beforehand. Furthermore, as for the transport packet including the PCR, this packet should be updated so as to eliminate a payload portion by extending an adaptation field.

Note here that a management file similar to the management file of Embodiment 2 may be recorded in the method described in Embodiment 1. In addition, although the management file is recorded separately in Embodiment 2, the management file may be stored in the transport packet, for example, by recording it at the end of the recording file in the form of a private PES stream that is divided into a transport stream.

In addition, in Embodiment 2, the PAT/PMT pointer is a data size between the PAT_TSP that has been input in the recent past traced back from the PMT_TSP that has been input in the recent past traced back from the SOBU and the head of the SOBU. However, a data size between the PAT_TSP that has been input in the recent past traced back from the PMT_TSP that has been input in the recent past traced back from the transport packet including the PCR that has been input in the recent past traced back from the SOBU and that SOBU is more preferable.

In this case, at the time of reproducing, transport packets including the PAT_TSP, the PMT_TSP and the PCR that are sandwiched between the head of the SOBU and the PAT/PMT pointer only are output before sending out the SOBU. Thereby, the MPEG decoder on the reception side of the transport stream can obtain the value of the PCR before it refers to the PTS and the DTS that are described in the PES header in the first V_TSP of the SOBU, and therefore operation after referring to the PTS and the DTS can be conducted.

On the other hand, in Embodiment 3, the operation after referring to the PTS and the DTS cannot be conducted, and therefore timing control is required, for example, by referring to a vdv_delay field in the video data and starting the decoding of the video at the time when an elapsed time from the input time of the first V_TSP of the SOBU agrees with the value of the vdv_delay field.

Furthermore, in Embodiment 2, the PAT/PMT pointer is a data size between the head of the SOBU and the PAT_TSP that has been input in the recent past traced back from the PMT_TSP that has been input in the recent past traced back from the SOBU. However, this may indicate the position forward from the head of the SOBU by a predetermined number (e.g., forward by 100 pieces of transport packets). In this case, in view of the insertion frequency of PAT/PMT/PCR, the number such that they are necessarily included is desirable.

In addition, in Embodiment 2, the PAT/PMT pointer is a data size between the head of the SOBU and the PAT_TSP that has been input in the recent past traced back from the PMT_TSP that has been input in the recent past traced back from the SOBU. However, this may indicate the position of a transport packet that has been input before the head of the SOBU by a predetermined time period (e.g., by 300 msec).

For example, when the 300 msec-old position is indicated, in the case of the digital broadcast of Japan and the European digital broadcast (DVB), there is a high probability that a PAT_TSP, the following PMT_TSP and the following PCR are included during this time period in this stated order. This is because they specify as the operational stipulation the sending frequency of PAT_TSPs and PMT_TSPs to be 100 msec or more.

In addition, instead of specifying the position of the transport packet that has been input a predetermined time period before using the PAT/PMT pointer, the position may be searched at the time of reproducing. In this case, however, the arriving timing should be recorded separately in the unit of transport packets as a precondition.

Note here that Embodiment 2 describes the case where, if the TSP arriving time is larger than a value of 1.5 times the SOBU time length, the time length valid flag is set at "0". However, this always may be set at "0", if the SOBU has a trick mode flag in the PES header, which is used at the time of special reproduction.

In addition, in Embodiment 2, the PAT/PMT pointer is recorded as the management information. However, a transport packet including the actual PAT and a transport packet including such a PMT may be recorded for each unit of the SOBU group whose continuity of the MPEG standard is secured, separately from the management information for each SOBU group. In addition, they may be recorded for each recording file. In the case of recording for each recording file, however, if a transport packet including a DIT is detected, the recording file should be separated into a portion before the detection and a portion after the detection. In addition, tables of the PAT and the PMT only may be included without the transport packet header.

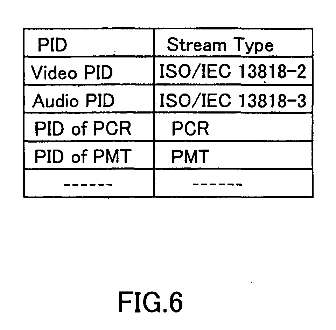

In addition, when recording is conducted for each recording file, instead of recording the transport packet including the PAT and the transport packet including the PMT as they are, the correspondence between the types of the respective elementary streams included therein and the PIDs, the PID of PMT, the PID in which the PCR is stored and the like may be recorded as shown in Fig. 6.

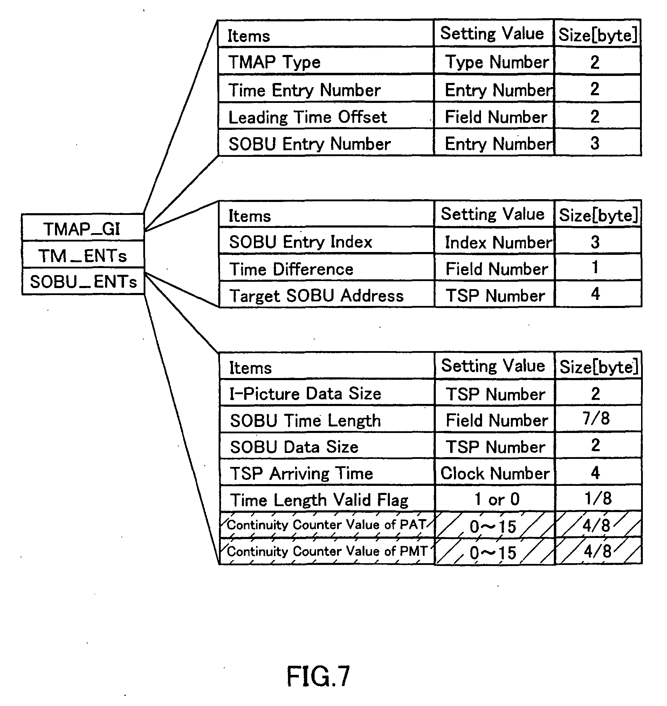

Furthermore, the value of the continuity counter of the transport packets including the first PAT and PMT in the SOBU may be detected and included. Fig. 7 shows an example of the management information for each of such SOBUs.

In addition, since the PAT and the PMT normally do not change across a plurality of SOBUs, an identifier for identifying the PAT_TSP and the PMT_TSP that are separately recorded as the management information for each SOBU group may be recorded for each SOBU group.

Then, in the case where a specific SOBU specified by a user is set as the reproduction starting point, the separately recorded PAT and PMT are constituted as a transport packet to be sent out prior to the SOBU. In addition, a transport packet including the PCR also should be sent out at a timing between the PMT and the SOBU.

At this time, as a value of the continuity counter of the transport packet including the PAT and the transport packet including the PMT, a value obtained by subtracting "1" from the value of the continuity counter of the first PAT and PMT of the SOBU, which is recorded as the management information, may be used. In this way, by keeping the value of the continuity counter of the first PAT and PMT of the SOBU as the management information, a PAT and a PMT can be easily produced.

Note here that, in Embodiment 2, the V_TSP including the first byte of the sequence start code is arranged at the head of the second SOBU or later. However, another transport packet may be recorded at the head of the SOBU. This is because the first V_TSP in the SOBU may include the first byte of the sequence start code. As an example of recording another transport packet, there is a case where a predetermined number of pieces of arriving timing information for the respective transport packets are brought together and stored.

In addition, Embodiment 2 has a configuration in which a MPEG decoder is not included in the AV data recording/reproducing apparatus. However, the MPEG decoder may be included in the AV data recording/reproducing apparatus. With this configuration, reproducing and displaying can be conducted within the AV data recording/reproducing apparatus.

Furthermore, in Embodiment 2, the V_TSP including the sequence header includes the PES header. However, the V_TSP does not necessarily include the PES header. This is because the MPEG standard permits the case where the PES header of the video is present only once at the head of the stream.

In addition, Embodiment 2 is silent on the sending timing of the transport packets including the PAT_TSP, the PMT_TSP and the PCR, which are sent out prior to the V_TSP at the head of the SOBU. This may be sent out at a time interval with consideration given to the processing speed of the reception side.

Furthermore, in Embodiment 2, the first SOBU is recorded from the PAT_TSP. However, recording may be started with other types of transport packet. For instance, all of the transport packets before the first PAT_TSP arrives may be recorded.

In addition, in Embodiment 2, the SOBU time length and the TSP arriving time are recorded for each SOBU. However, only the TSP arriving time may be recorded. In this case, the detection procedure of the sequence header and the count procedure of the field number become unnecessary, and therefore the management information generation unit can be simplified.

### Embodiment 3

The following describes an AV data recording/reproducing apparatus according to Embodiment 3 of the present invention, with reference to the drawings. While the above-described Embodiment 1 and Embodiment 2 record and reproduce video files, Embodiment 3 describes the case of recording and reproducing audio files.

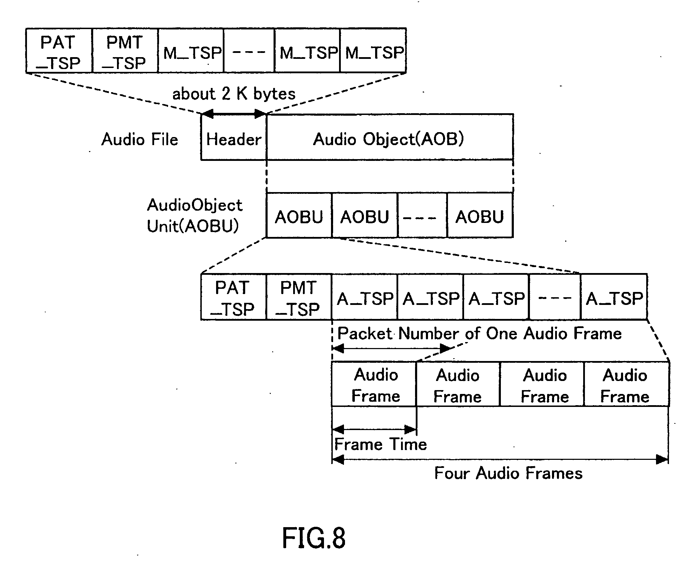

Fig. 8 shows a data configuration of an audio file in the AV data recording/reproducing apparatus according to Embodiment 3 of the present invention. As shown in Fig. 8, the audio file is configured with a header whose data size is a fixed length (e.g., about 2 kilobytes) and an audio object (hereinafter referred to as "AOB"). The AOB is configured with a plurality of audio object units (hereinafter referred to as "AOBU").

In the header, management information on the audio file is stored. Each AOBU includes a predetermined number (e.g., 4) of audio frames, and a PAT_TSP and a PMT_TSP at its head. In addition, one audio frame is configured with a predetermined number (e.g., 3) of transport packets A_TSPs.

Fig. 8 is based on the assumption that each audio frame functions as a fixed bit rate. In addition, the configuration of the AV data recording/reproducing apparatus for recording/reproducing audio files is illustrated by Fig. 1 similarly to Embodiment 1, and therefore the detailed explanation thereof will be omitted.

By making the audio file have the data configuration as shown in Fig. 8, when reproduction is started from the midpoint of an AOBU, the PAT_TSP and the PMT_TSP necessarily are included. Therefore, even when reproduction is started with any AOBUs of the audio file, the reproduction from the leading audio frame can be secured.

In addition, if four audio frames are included in an AOBU as shown in Embodiment 3, the insertion timing of PAT/PMT can be set at every 100 msec or less. Thereby, the insertion timing can be within 100 msec, which is defined by the 1394 transmission standard that is compatible with the BS digital broadcast of Japan. More specifically, the case where the ISO/IEC 13818-7 Advanced Audio Coding compression is used with 48 KHz sampling and 1024 sample applies to this.

In addition, as shown in Fig. 8, by fixing the insertion timing of the PAT_TSP and the PMT_TSP, the number of audio frames constituting an AOBU and the number of transport packets constituting an audio frame, when reproduction is carried out from a midpoint of the AOBU by specifying a time, the position of the AOBU corresponding to the time can be determined by only the simple calculation, which eliminates the necessity of recording tables corresponding to the TM_END tables and the SOBU_ENT tables as in Embodiment 2. The only required information is a frame time of one audio frame, the number of transport packets constituting one audio frame and the number of audio frames constituting one AOBU. This information may be recorded in a header portion of the audio file, for example.

Note here that Embodiment 3 describes that the insertion timing of the PAT_TSP and the PMT_TSP, the number of audio frames constituting an AOBU and the number of transport packets constituting an audio frame are fixed. However, the number of audio frames constituting an AOBU and the number of transport packets constituting an audio frame may be set at a predetermined number or less. In this case, however, it is preferable that tables corresponding to the TM_ENT tables and the SOBU_ENT tables as in Embodiment 2 are recorded as a file footer or as a separate management file.

In addition, in Embodiments 1 and 3 of the present invention, the PAT_TSP and the PMT_TSP are arranged at the head of a VOBU or an AOBU. However, another transport packet may be recorded immediately before the PAT_TSP and the PMT_TSP, and thereafter the PAT_TSP and the PMT_TSP may be recorded. This is because the PAT_TSP and the PMT_TSP may be recorded prior to the first V_TSP or A_TSP of the VOBU or AOBU. As an example of recording another transport packet, there is a case where a predetermined number of pieces of arriving timing information for the respective transport packets are brought together and stored.

Note here that it is desirable that, in the first A_TSP of the AOBU, a PCR is included in the transport packet header. With this configuration, the PAT_TSP, PMT_TSP and the PCR can be sent out prior to the audio data in the A_TSP.

### Embodiment 4

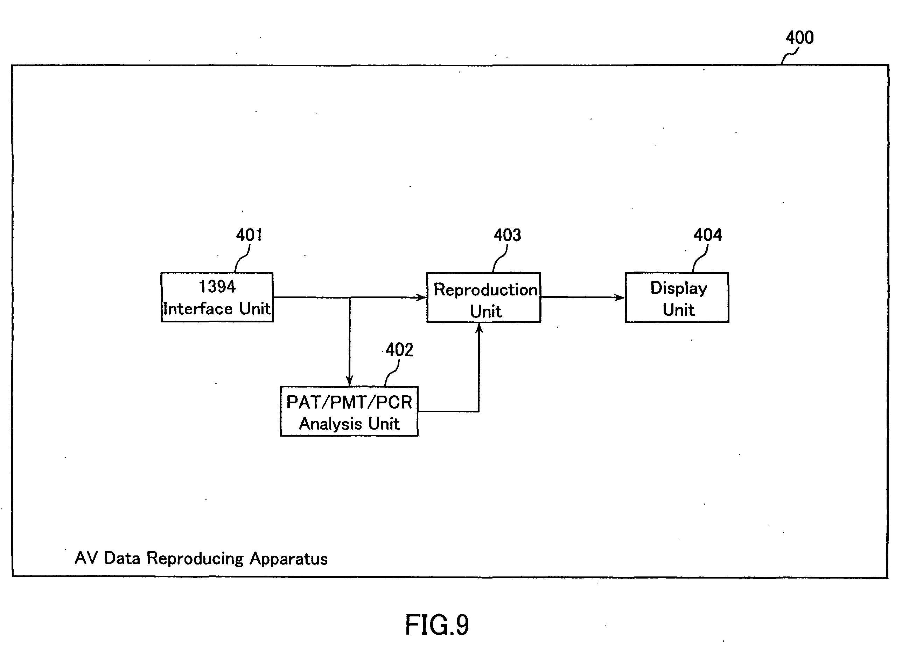

Fig. 9 shows a configuration of an AV data reproducing apparatus that is connected with the 1394 interface unit of Fig. 1 via a 1394 cable. A transport stream input from a 1394 interface unit 401 is subjected to the extraction of PAT, PMT and PCR fields by a PAT/PMT/PCR analysis unit 402. After the analysis, a PID of video and audio and a PCR required for decoding are passed to a reproduction unit 403. Once the reproduction unit 403 receives the PID of video, the PID of audio and the PCR, the reproduction unit 403 starts to store the input transport stream, starts the decoding procedure of the transport stream using it and passes the decoded video signal and audio signal to a display unit 404. At the starting time of the decoding procedure, in the case where the transport packet including the PCR serves as a trigger of the storage and the decoding, the transport packet and the following transport packets become the object for the storage and the decoding. Thereafter, every time the PAT/PMT/PCR analysis unit 402 detects PAT/PMT/PCR, this unit passes the PID and the PCR to the reproduction unit 403.

With the above-stated configuration, the transport stream output from the 1394 interface unit 401 in the AV data recording/reproducing apparatuses according to Embodiments 1, 2 and 3 is input to the 1394 interface unit 401 of the AV data reproducing apparatus shown in Fig. 9, whereby reproduction from the head of the input transport stream can be secured.

The processing time required for the analysis procedure of PAT/PMT/PCR is different from various AV data reproducing apparatus. For example, the processing time of one model is 0.5 second and that of another model is 1.0 second. In spite of this, by outputting a unified transport stream so as not to depend on the processing time as in the AV data recording/reproducing apparatuses (sending side) according to Embodiments 1, 2 and 3, the reproduction of the transport stream can be started promptly upon completion of the analysis procedure of PAT/PMT/PCR. This method can shorten the delay time before the video and the audio output as compared with the method in which the AV data reproducing apparatus on the transmission side sends out only the transport packet including PAT/PMT/PCR by estimating the maximum value of the analysis procedure time and the output of a transport stream is suspended during the maximum value of the analysis procedure time. In addition, even in the case where a specific scene is selected and a plurality of the selected scenes are reproduced sequentially, this method can shorten the time for switching the scenes.

In addition, when such switching of scenes is generated, the AV data reproducing apparatus may be notified beforehand of the switching timing of the scenes. As the notified contents, for example, the reproduction timing of the first frame of the next scene may be provided, which is represented as the value of a STC (system time clock) that is used in the preceding scene. As the notification method, an AVC command according to 1394 may be used, for example. Alternatively, the notification may be provided using a special transport packet.

In addition, the AV data reproducing apparatus side may be notified of the information concerning the PAT/PMT of the next scene a short time before the switching timing of the transport stream. In order to provide the information, version numbers of the PAT and the PMT (version_number) field and current_next_indicator field may be used.

In addition, at the switching timing of the scenes, the transmission side may insert a transport packet including a DIT (Discontinuity Information Table) so as to allow the switching timing in the transport stream to be confirmed by monitoring the input stream.

Note here that, Embodiment 4 is based on the assumption that, in the PAT/PMT/PCR analysis unit 402, the PAT, PMT and PCR are input in this order. However, even when they are input in a different order, the information such as the PID of the video and the audio and the PCR, which are included in the PAT, PMT and PCR may be passed to the reproduction unit 403.

By making such a procedure the precondition, in Embodiment 3, transport packets including a PAT_TSP, a PMT_TSP and a PCR may be extracted from the transport packets that have been input in the past within 100 msec before the transport packet including the sequence header and they may be sent out in the order as they have been. At this time, in spite of the transmission order of the transport packets including the PAT_TSP, the PMT_TSP and the PCR, the reception side corrects them in the order of the transport packets of the PAT_TSP followed by the PMT_TSP and the PCR and analyzes them. This can eliminate the necessity to extract these transport packets from the transport stream that has been input 300 msec before.

In addition, by making such a procedure the precondition, in Embodiments 1 and 2, there is no need to keep the transmission order and the recording order of the transport packets including the PAT_TSP, the PMT_TSP and the PCR in this order. In addition, the PAT/PMT pointer in Embodiment 3 may refer to the positional information of the transport packet that has been input in the recent past among the transport packets including the PAT_TSP, the PMT_TSP or the PCR. This is because these three types of transport packets exist from that position to the head of the SOBU.

### Embodiment 5

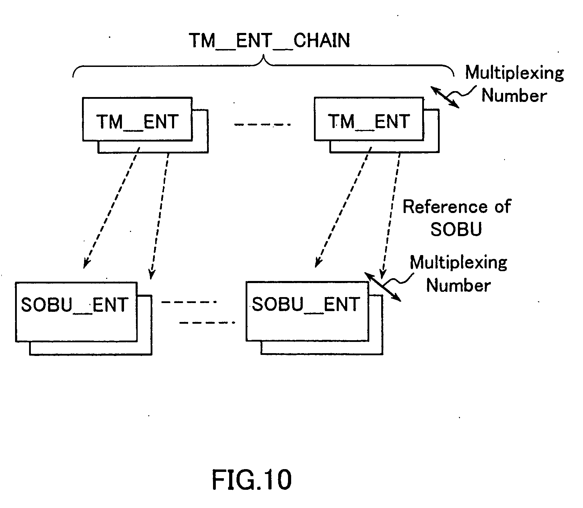

Fig. 10 shows a data configuration of management information in the case where a transport stream input from the outside is via the multiview broadcast according to the ARIB standard. In the multiview broadcast, up to three broadcast programs are multiplexed in one transport stream. In the case of such a transport stream, a SOBU_ENT table and a TM_ENT table are generated for each program.

Then, the respective SOBU_ENT tables of a broadcast program 1, a broadcast program 2 and a broadcast program 3, whose display time is close to one another, are recorded repeatedly in the order as in 1, 2, 3, 1, 2, 3 ···. The TM_ENT tables are recorded in a similar manner. Note here that the respective SOBU_ENT tables and TM_ENT tables have the same data configuration as those of Embodiment 2. In addition, the multiplexing number of broadcast programs is recorded in the TMAP_GI.

The rest of the configuration is similar to that of Embodiment 2.

With this configuration, even in the case of the multiview broadcast, a transport stream can be sent out from an arbitrary sequence header in an arbitrary broadcast program so as to include a PAT, a PMT and a PCR.

Note here that the SOBU_ENT tables corresponding to the broadcast program 2 and the broadcast program 3 may be recorded after the SOBU_ENT table of the broadcast program 1 in serial. In addition, similarly, the TM_ENT tables corresponding to the broadcast program 2 and the broadcast program 3 may be recorded after the TM_ENT table of the broadcast program 1 in serial.

Note here that although all of the above-described Embodiments describe the phase change optical disk as the storage medium, the medium is not limited to this. For example, storage media having a disk form including optical disks such as DVD-RAM, MO, DVD-R, DVD-RW, DVD+RW, CD-R and CD-RW and hard disk and storage media that do not have a disk form are available. In addition, semiconductor memories such as flash memory also are available.

Similarly, in Embodiments of the present invention, the pickup is used as the reading/writing head. However, in the case of a MO, the pickup or a magnetic head is used, and in the case of hard disk, a magnetic head is used.

Note here that, in Embodiments of the present invention, the logical block has 32 Kbytes and the sector has 2 Kbytes. However, as long as the size of the logical block is an integral multiple of the sector size, they are not especially limited to the stated size. For example, the logical block may have 16 Kbytes and the sector may have 2 Kbytes. Alternatively, both of the logical block and the sector have 2 Kbytes.

In addition, Embodiments of the present invention describe that the video compression code and the audio compression code respectively are the MPEG 2 video compression code and the AAC compression code. However, they may be a MPEG 1 video compression code, a MPEG 4 video compression code, a MPEG-Audio compression code, Dolby AC3 compression code, Twin-VQ compression code or the like.

Note here that, in Embodiments of the present invention, the output timing generation unit determines the transmission timing of a transport stream. Instead, the transmission timing of the transport packet output from the system encode unit 104 may be recorded together with the transport packet at the time of the recording and this transmission timing information may be used at the time of 1394 output. This can be realized by, for example, recording the 4-byte transmission timing information immediately before the transport packet so as to record it in the packet format of 192 bytes in total. In addition, a plurality pieces of transmission timing information may be stored in a transport packet exclusively used for storing the transmission timing information, and immediately after that transport packet, the corresponding transport packet may be recorded. In this case, the data size of the packet remains 188 bytes.

In addition, in Embodiments of the present invention, the logical block has 32 Kbytes and the sector has 2 Kbytes. However, as long as the size of the logical block is an integral multiple of the sector size, they are not especially limited to the stated size. For example, the logical block may have 16 Kbytes and the sector may have 2 Kbytes. Alternatively, both of the logical block and the sector have 2 Kbytes.

### INDUSTRIAL APPLICABILITY

As stated above, according to the AV data recording/reproducing apparatuses of the present invention, even when a midpoint of a file is designated as a reproduction starting point, all of the frames can be reproduced securely in the equipment and can be reproduced through the 1394 interface.

## Claims

1. An AV data recording apparatus comprising a video recording unit for recording video data as data composed of continuous unit packets including a MPEG transport packet,
wherein a transport packet including a PAT (program association table) and a transport packet including a PMT (program map table) are recorded at a predetermined interval and at a predetermined position prior to a transport packet including a sequence header in the video data.

2. The AV data recording apparatus according to claim 1, wherein the predetermined position is an immediately preceding position.

3. The AV data recording apparatus according to claim 1, wherein the predetermined interval is between 0.4 second and 1 second, inclusive.

4. The AV data recording apparatus according to claim 1, further comprising a management information recording unit for recording information concerning a recording position of the data,
wherein the recording position is a second predetermined position prior to the PAT.

5. The AV data recording apparatus according to claim 4, wherein the second predetermined position is a position of the unit packet immediately before the PAT.

6. The AV data recording apparatus according to claim 1, wherein the transport packet including the sequence header includes a PCR (program clock reference).

7. An AV data recording apparatus, comprising:
a transport packet input unit;
a management information generation unit for generating management information from information contained in the transport packet; and
a recording unit for recording the transport packet and the management information,
wherein the management information includes positional information of the transport packet that includes at least a part of a sequence header.

8. An AV data recording apparatus, comprising:
a transport packet input unit;
a management information generation unit for generating management information concerning the transport packet; and
a recording unit for recording the transport packet and the management information,
wherein the management information includes positional information of the transport packet including a PAT (program association table) that has been input in the recent past traced back from the transport packet including a PMT (program map table) that has been input in the recent past traced back from a transport packet including a PCR that has been input in the recent past with respect to the transport packet including at least a part of a sequence header.

9. An AV data recording apparatus, comprising:
a transport packet input unit;
a management information generation unit for generating management information concerning the transport packet; and
a recording unit for recording the transport packet and the management information,
wherein the management information includes positional information of the transport packet that has been input a predetermined time period before the transport packet that includes at least a part of a sequence header.

10. The AV data recording apparatus according to claim 9, wherein the predetermined time period is 300 msec.

11. The AV data recording apparatus according to claim 9, wherein the predetermined time period is 100 msec.

12. An AV data recording apparatus, comprising:
a transport packet input unit;
a management information generation unit for generating management information concerning the transport packet; and
a recording unit for recording the transport packet and the management information,
wherein the management information includes: positional information of the transport packet including a first PMT (program map table) that has been input after the transport packet including at least a part of a sequence header; and positional information of the transport packet including a first PAT (program association table) that has been input after the transport packet including the sequence header.

13. An AV data recording apparatus comprising an audio recording unit for recording audio data as data composed of continuous unit packets including a MPEG transport packet,
wherein the audio recording unit records a transport packet including a PAT (program association table) and a transport packet including a PMT (program map table) immediately before transport packets including a predetermined number of audio frames.

14. The AV data recording apparatus according to claim 13, wherein the predetermined number of audio frames corresponds to 100 msec or less.

15. The AV data recording apparatus according to claim 13, wherein the transport packet including the sequence header includes a PCR (program clock reference).

16. The AV data recording apparatus according to claim 1 or 13, wherein the transport packet including the PAT (program association table) includes a PCR (program clock reference).

17. The AV data recording apparatus according to claim 1 or 13, wherein the transport packet including the PMT (program association table) includes a PCR (program clock reference).

18. The AV data recording apparatus according to claim 7 or 12, wherein a part of the sequence header is a first byte or a last byte of a sequence start code.

19. The AV data recording apparatus according to claim 13, wherein out of the transport packets including the predetermined number of audio frames, the transport packet located at the head thereof includes a PCR (program clock reference).

20. An AV data recording apparatus, comprising:
a transport packet input unit;
a management information generation unit for generating management information concerning the transport packet; and
a recording unit for recording the transport packet and the management information,
wherein the management information includes: positional information of a leading transport packet in a group consisting of a plurality of the transport packets; and input elapsed time information on the group.

21. An AV data recording apparatus, comprising:
a transport packet input unit;
a management information generation unit for generating management information concerning the transport packet; and
a recording unit for recording the transport packet and the management information,
wherein the management information includes: positional information of a leading transport packet in a group consisting of a plurality of the transport packets; and a PAT (program association table) and a PMT (program map table) that are commonly included in the group.

22. An AV data recording apparatus, comprising:
a transport packet input unit;
a management information generation unit for generating management information concerning the transport packet; and
a recording unit for recording the transport packet and the management information,
wherein the transport packet includes N pieces of video in parallel, and
the management information includes: positional information of the transport packet including a sequence header that is included in the N pieces of video.

23. The AV data recording apparatus according to claim 22, wherein the management information includes the positional information on the N pieces of video in parallel.

24. An AV data reproducing apparatus comprising a video reproduction unit for reproducing video data composed of unit packets including a MPEG transport packet,
wherein the video data includes a transport packet including a PAT (program association table) and a transport packet including a PMT (program map table) at a predetermined position prior to a transport packet including a sequence header, and
when reproduction is carried out from the sequence header that is included in the video data, the reproduction from the transport packet including the PAT and the transport packet including the PMT and later is carried out.

25. The AV data reproducing apparatus according to claim 24, wherein the predetermined position is an immediately preceding position.

26. An AV data reproducing apparatus, comprising:
a read-out unit for reading out a transport packet and management information concerning the transport packet from a recording medium; and
an output unit for starting output with a transport packet including at least a part of a sequence header by referring to the management information,
wherein the management information includes positional information of the transport packet including a PAT (program association table) to be output in the recent past traced back from the transport packet including a PMT (program map table) to be output in the recent past traced back from a transport packet including a PCR to be output in the recent past with respect to the sequence header,
the read-out unit refers to the positional information in the management information before outputting the transport packet so as to read out the transport packet including the PAT and the transport packet including the PMT, and
the output unit outputs the transport packet including the PAT, the transport packet including the PMT and the transport packet including the PCR before outputting the transport packet including the sequence header.

27. An AV data reproducing apparatus, comprising:
a read-out unit for reading out a transport packet and management information concerning the transport packet from a recording medium; and
an output unit for starting output with a transport packet including a sequence header by referring to the management information,
wherein the management information includes positional information of the transport packet to be output a predetermined time period before the transport packet including the sequence header,
the read-out unit refers to the positional information in the management information before outputting the transport packet so as to read out at least transport packets including a PAT and a PMT that are included in transport packets from the transport packet to be output the predetermined time period before to the transport packet including the sequence header, and
the output unit outputs the transport packets including the PAT and the PMT before outputting the transport packet including the sequence header.

28. An AV data reproducing apparatus, comprising:
a read-out unit for reading out a transport packet and management information concerning the transport packet from a recording medium; and
an output unit for starting output with a transport packet including a sequence header by referring to the management information,
wherein the management information includes positional information of the transport packet including a first PMT (program map table) to be output after the transport packet including the sequence header and positional information of the transport packet including a first PAT (program association table) to be output after the transport packet including the sequence header,
the read-out unit refers to the positional information in the management information so as to read out the transport packet including the PMT and the transport packet including the PAT, and
the output unit outputs the transport packet including the PAT and the transport packet including the PMT before outputting the transport packet including the sequence header.

29. An AV data reproducing apparatus, comprising:
a read-out unit for reading out a transport packet and management information concerning the transport packet from a recording medium; and
an output unit for starting output with a transport packet including a sequence header by referring to the management information,
wherein the management information includes positional information of the sequence header,
the read-out unit refers to the positional information in the management information so as to read out the transport packets a predetermined number before the transport packet including the sequence header, and
the output unit carries out a predetermined conversion process with respect to the transport packet including the PAT located at an aftermost position, the transport packet including the PMT located at an aftermost position and a transport packet including a PCR located at an aftermost position out of the transport packets the predetermined number before and then outputs the same before outputting the transport packet including the sequence header.

30. An AV data reproducing apparatus, comprising:
a read-out unit for reading out a transport packet and management information concerning the transport packet from a recording medium; and
an output unit for starting output with a transport packet including a sequence header by referring to the management information,
wherein the management information includes positional information of the sequence header,
the read-out unit refers to the positional information in the management information so as to read out the transport packets a predetermined number after the transport packet including the sequence header, and
the output unit carries out a predetermined conversion process with respect to the transport packet including the PAT located at a headmost position, the transport packet including the PMT located at a headmost position and a transport packet including a PCR located at a headmost position out of the transport packets the predetermined number before and then outputs the same before outputting the transport packet including the sequence header.

31. An AV data reproducing apparatus comprising an audio reproduction unit for reproducing audio data composed of MPEG transport packets recorded on a recording medium,
wherein the audio data includes a transport packet including a PAT (program association table) and a transport packet including a PMT (program map table) at a predetermined position with respect to transport packets including a predetermined number of audio frames, and
when reproduction is carried out from a head of the audio frames included in the audio data, the reproduction from the transport packet including the PAT and the transport packet including the PMT and later is carried out.

32. The AV data reproducing apparatus according to claim 31, wherein the predetermined position is an immediately preceding position.

33. An AV data reproducing apparatus, comprising:
a read-out unit for reading out a transport packet and management information concerning the transport packet from a recording medium; and
an output unit for starting output with a transport packet corresponding to a designated output starting time by referring to the management information,
wherein the management information includes positional information of a leading transport packet in a group consisting of a plurality of the transport packets and output elapsed time information on the group, and
the output unit specifies an output starting position from the designated output starting time by referring to the output elapsed time information and outputs transport packets at the output starting position and later.

34. An AV data reproducing apparatus, comprising:
a read-out unit for reading out a transport packet and management information concerning the transport packet from a recording medium; and
an output unit for starting output with a transport packet corresponding to a designated output starting time by referring to the management information,
wherein the management information includes positional information of a leading transport packet in a group consisting of a plurality of the transport packets, the number of decoding units included in the group and output elapsed time information on the group, and
the output unit specifies an output starting position from the designated output starting time by referring to the number of decoding units or the output elapsed time information and outputs transport packets at the output starting position and later.

35. An AV data reproducing apparatus, comprising:
a read-out unit for reading out a transport packet and management information concerning the transport packet from a recording medium; and
an output unit for starting output with a transport packet corresponding to a designated output starting time by referring to the management information,
wherein the management information includes positional information of a leading transport packet in a group consisting of a plurality of the transport packets, the number of decoding units included in the group and output elapsed time information on the group, and
the output unit compares an output elapsed time calculated by referring to the number of the decoding units and the output elapsed time information, and if a difference in the elapsed time is larger than a predetermined value, specifies an output starting position from the output elapsed time information and outputs transport packets at the output starting position and later.

36. An AV data reproducing apparatus, comprising:
a transport packet input unit;
a decoding unit for decoding the input transport packet and outputting the same; and
an initialization unit for carrying out initialization of the decoding unit by extracting a PAT (program association table), a PMT (program map table) and a PCR (program clock reference) included in the transport packet,
wherein the decoding unit stores the input transport packet until a procedure by the initialization unit has been completed, and, after the completion of the procedure by the initialization unit, starts a decoding procedure with a transport packet after the stored transport packet including the PCR.

37. An AV data recording/reproducing apparatus, comprising:
a video recording unit for recording video data as data composed of continuous unit packets including a MPEG transport packet, and
a video reproduction unit for reproducing the video data composed of unit packets including a MPEG transport packet,
wherein the video recording unit records a transport packet including a PAT (program association table) and a transport packet including a PMT (program map table) at a predetermined interval and at a predetermined position prior to a transport packet including a sequence header in the video data, and
when reproducing is carried out from the sequence header included in the video data, the video reproduction unit reproduces the transport packet including the PAT and the transport packet including the PMT and later.

38. An AV data recording/reproducing apparatus, comprising:
a transport packet input unit;
a management information generation unit for generating management information concerning the transport packet;
a recording unit for recording the transport packet and the management information;
a read-out unit for reading out the transport packet and the management information concerning the transport packet from a recording medium; and
an output unit for starting output with a transport packet including at least a part of a sequence header by referring to the management information,
wherein the management information includes positional information of the transport packet including a PAT (program association table) that has been input in the recent past traced back from the transport packet including a PMT (program map table) that has been input in the recent past traced back from a transport packet including a PCR that has been input in the recent past with respect to the transport packet including at least a part of a sequence header,
the read-out unit refers to the positional information in the management information before outputting the transport packet so as to read out the transport packet including the PAT and the transport packet including the PMT, and
the output unit outputs the transport packet including the PAT, the transport packet including the PMT and a transport packet including the PCR before outputting the transport packet including the sequence header.

39. An AV data recording/reproducing apparatus, comprising:
a transport packet input unit;
a management information generation unit for generating management information concerning the transport packet;
a recording unit for recording the transport packet and the management information;
a read-out unit for reading out the transport packet and the management information concerning the transport packet from a recording medium; and
an output unit for starting output with a transport packet including a sequence header by referring to the management information,
wherein the management information includes positional information of the transport packet including a first PMT (program map table) that has been input a predetermined time period before the transport packet including the sequence header, and positional information of the transport packet that has been input after the transport packet including the sequence header,
the read-out unit refers to the positional information in the management information before outputting the transport packet so as to read out at least the transport packets including a PAT and a PMT that are included in transport packets from a transport packet to be output predetermined time period before to the transport packet including the sequence header, and
the output unit outputs the transport packets including the PAT and the PMT before outputting the transport packet including the sequence header.

40. An AV data recording/reproducing apparatus, comprising:
a transport packet input unit;
a management information generation unit for generating management information from information concerning the transport packet;
a recording unit for recording the transport packet and the management information;
a read-out unit for reading out the transport packet and the management information concerning the transport packet from a recording medium; and
an output unit for starting output with a transport packet including a sequence header by referring to the management information,
wherein the management information includes positional information of the transport packet including a first PMT (program map table) that has been input after the transport packet including at least a part of a sequence header and positional information of the transport packet including a first PAT (program association table) that has been input after the transport packet including the sequence header,
the read-out unit refers to the positional information in the management information so as to read out the transport packet including a PAT and the transport packet including a PMT, and
the output unit outputs the transport packet including the PAT and the transport packet including the PMT before outputting the transport packet including the sequence header.

41. An AV data recording/reproducing apparatus, comprising:
an audio recording unit for recording audio data as data composed of continuous unit packets including a MPEG transport packet; and
an audio reproduction unit for reproducing the audio data composed of a MPEG transport packet, recorded on a recording medium;
wherein the audio data includes a transport packet including a PAT (program association table) and a transport packet including a PMT (program map table) at a predetermined position with respect to transport packets including a predetermined number of audio frames, and
when reproduction is carried out from a head of the audio frames included in the audio data, the reproduction from the transport packet including the PAT and the transport packet including the PMT and later is carried out.

42. An AV data recording/reproducing apparatus, comprising:
a transport packet input unit;
a management information generation unit for generating management information concerning the transport packet;
a recording unit for recording the transport packet and the management information;
a read-out unit for reading out the transport packet and the management information concerning the transport packet from a recording medium; and
an output unit for starting output with a transport packet corresponding to a designated output starting time by referring to the management information,
wherein the management information includes positional information of a leading transport packet in a group consisting of a plurality of the transport packets and the number of decoding units included in the group and output elapsed time information on the group, and
the output unit specifies an output starting position from the designated output starting time by referring to the number of decoding units or the output elapsed time information and outputs transport packets at the output starting position and later.

43. An AV data recording method comprising the step of recording video data as data composed of continuous unit packets including a MPEG transport packet,
wherein a transport packet including a PAT (program association table) and a transport packet including a PMT (program map table) are recorded at a predetermined interval and at a predetermined position prior to a transport packet including a sequence header in the video data.

44. An AV data recording method, comprising the steps of:
inputting a transport packet;
generating management information from information contained in the transport packet; and
recording the transport packet and the management information,
wherein the management information includes positional information of the transport packet that includes at least a part of a sequence header.

45. An AV data recording method, comprising the steps of:
inputting a transport packet;
generating management information concerning the transport packet; and
recording the transport packet and the management information,
wherein the management information includes positional information of the transport packet including a PAT (program association table) that has been input in the recent past traced back from the transport packet including a PMT (program map table) that has been input in the recent past traced back from a transport packet including a PCR that has been input in the recent past with respect to the transport packet including at least a part of a sequence header.

46. An AV data recording method, comprising the steps of:
inputting a transport packet;
generating management information concerning the transport packet; and
recording the transport packet and the management information,
wherein the management information includes positional information of the transport packet that has been input a predetermined time period before the transport packet that includes at least a part of a sequence header.

47. An AV data recording method, comprising the steps of:
inputting a transport packet;
generating management information concerning the transport packet; and
recording the transport packet and the management information,
wherein the management information includes: positional information of the transport packet including a first PMT (program map table) that has been input after the transport packet including at least a part of a sequence header; and positional information of the transport packet including a first PAT (program association table) that has been input after the transport packet including the sequence header.

48. An AV data recording method comprising the step of: recording audio data as data composed of continuous unit packets including a MPEG transport packet,
wherein, in the step of recording the audio data, a transport packet including a PAT (program association table) and a transport packet including a PMT (program map table) are recorded immediately before transport packets including a predetermined number of audio frames.

49. An AV data recording method, comprising the steps of:
inputting a transport packet;
generating management information concerning the transport packet; and
recording the transport packet and the management information,
wherein the management information includes: positional information of a leading transport packet in a group consisting of a plurality of the transport packets; and input elapsed time information on the group.

50. An AV data recording method, comprising the steps of:
inputting a transport packet;
generating management information concerning the transport packet; and
recording the transport packet and the management information,
wherein the management information includes: positional information of a leading transport packet in a group consisting of a plurality of the transport packets; and a PAT (program association table) and a PMT (program map table) that are commonly included in the group.

51. An AV data recording method, comprising the steps of:
inputting a transport packet;
generating management information concerning the transport packet; and
recording the transport packet and the management information,
wherein the transport packet includes N pieces of video in parallel, and
the management information includes positional information of the transport packet including a sequence header that is included in the N pieces of video.

52. The AV data recording method according to claim 51, wherein the management information includes the positional information on the N pieces of video in parallel.

53. An AV data reproducing method comprising the step of: reproducing video data composed of unit packets including a MPEG transport packet,
wherein the video data includes a transport packet including a PAT (program association table) and a transport packet including a PMT (program map table) at a predetermined position prior to a transport packet including a sequence header, and
when reproduction is carried out from the sequence header that is included in the video data, the reproduction from the transport packet including the PAT and the transport packet including the PMT and later is carried out.

54. An AV data reproducing method, comprising the steps of:
reading out a transport packet and management information concerning the transport packet from a recording medium; and
starting output with a transport packet including at least a part of a sequence header by referring to the management information,
wherein the management information includes positional information of the transport packet including a PAT (program association table) to be output in the recent past traced back from the transport packet including a PMT (program map table) to be output in the recent past traced back from a transport packet including a PCR to be output in the recent past with respect to the sequence header,
in the step of reading out the management information, reference is made to the positional information in the management information before outputting the transport packet so as to read out the transport packet including the PAT and the transport packet including the PMT, and
in the step of starting the output, the transport packet including the PAT, the transport packet including the PMT and the transport packet including the PCR are output before outputting the transport packet including the sequence header.

55. An AV data reproducing method, comprising the steps of:
reading out a transport packet and management information concerning the transport packet from a recording medium; and
starting output with a transport packet including a sequence header by referring to the management information,
wherein the management information includes positional information of the transport packet to be output a predetermined time period before the transport packet including the sequence header,
in the step of reading out the management information, reference is made to the positional information in the management information before outputting the transport packet so as to read out at least transport packets including a PAT and a PMT that are included in transport packets from the transport packet to be output the predetermined time period before to the transport packet including the sequence header, and
in the step of starting the output, the transport packets including the PAT and the PMT are output before outputting the transport packet including the sequence header.

56. An AV data reproducing method, comprising the steps of:
reading out a transport packet and management information concerning the transport packet from a recording medium; and
starting output with a transport packet including a sequence header by referring to the management information,
wherein the management information includes positional information of the transport packet including a first PMT (program map table) to be output after the transport packet including the sequence header and positional information of the transport packet including a first PAT (program association table) to be output after the transport packet including the sequence header,
in the step of reading out the management information, reference is made to the positional information in the management information so as to read out the transport packet including the PMT and the transport packet including the PAT, and
in the step of starting the output, the transport packet including the PAT and the transport packet including the PMT are output before outputting the transport packet including the sequence header.

57. An AV data reproducing method, comprising the steps of:
reading out a transport packet and management information concerning the transport packet from a recording medium; and
starting output with a transport packet including a sequence header by referring to the management information,
wherein the management information includes positional information of the sequence header,
in the step of reading out the management information, reference is made to the positional information in the management information so as to read out the transport packets a predetermined number before the transport packet including the sequence header, and
in the step of starting the output unit, after a predetermined conversion process with respect to the transport packet including the PAT located at an aftermost position, the transport packet including the PMT located at an aftermost position and a transport packet including a PCR located at an aftermost position out of the transport packets the predetermined number before, the transport packets are output before outputting the transport packet including the sequence header.

58. An AV data reproducing method, comprising the steps of:
reading out a transport packet and management information concerning the transport packet from a recording medium; and
starting output with a transport packet including a sequence header by referring to the management information,
wherein the management information includes positional information of the sequence header,
in the step of reading out the management information, reference is made to the positional information in the management information so as to read out the transport packets a predetermined number after the transport packet including the sequence header, and
in the step of starting the output unit, after a predetermined conversion process with respect to the transport packet including the PAT located at a headmost position, the transport packet including the PMT located at a headmost position and a transport packet including a PCR located at a headmost position out of the transport packets the predetermined number before, the transport packets are output before outputting the transport packet including the sequence header.

59. An AV data reproducing method comprising the step of: reproducing audio data composed of MPEG transport packets recorded on a recording medium,
wherein the audio data includes a transport packet including a PAT (program association table) and a transport packet including a PMT (program map table) at a predetermined position with respect to transport packets including a predetermined number of audio frames, and
when reproduction is carried out from a head of the audio frames included in the audio data, the reproduction from the transport packet including the PAT and the transport packet including the PMT and later is carried out.

60. An AV data reproducing method, comprising the steps of:
reading out a transport packet and management information concerning the transport packet from a recording medium; and
starting output with a transport packet corresponding to a designated output starting time by referring to the management information,
wherein the management information includes positional information of a leading transport packet in a group consisting of a plurality of the transport packets and output elapsed time information on the group, and
in the step of starting the output, an output starting position is specified from the designated output starting time by referring to the output elapsed time information and transport packets at the output starting position and later are output.

61. An AV data reproducing method, comprising the steps of:
reading out a transport packet and management information concerning the transport packet from a recording medium; and
starting output with a transport packet corresponding to a designated output starting time by referring to the management information,
wherein the management information includes positional information of a leading transport packet in a group consisting of a plurality of the transport packets, the number of decoding units included in the group and output elapsed time information on the group, and
in the step of starting the output, an output starting position is specified from the designated output starting time by referring to the number of decoding units or the output elapsed time information and transport packets at the output starting position and later are output.

62. An AV data reproducing method, comprising the steps of:
reading out a transport packet and management information concerning the transport packet from a recording medium; and
starting output with a transport packet corresponding to a designated output starting time by referring to the management information,
wherein the management information includes positional information of a leading transport packet in a group consisting of a plurality of the transport packets, the number of decoding units included in the group and output elapsed time information on the group, and
in the step of starting the output, comparison is made between an output elapsed time calculated by referring to the number of the decoding units and the output elapsed time information, and if a difference in the elapsed time is larger than a predetermined value, an output starting position is specified from the output elapsed time information and transport packets at the output starting position and later are output.

63. An AV data reproducing method, comprising the steps of:
inputting a transport packet;
decoding the input transport packet and outputting the same; and
carrying out initialization of the step of decoding and outputting by extracting a PAT (program association table), a PMT (program map table) and a PCR (program clock reference) included in the transport packet,
wherein, in the step of decoding and outputting, the input transport packet is stored until a procedure in the step of carrying out the initialization has been completed, and, after the completion of the procedure in the step of carrying out the initialization, a decoding procedure is started with a transport packet after the stored transport packet including the PCR.

64. An AV data recording/reproducing method, comprising the steps of
recording video data as data composed of continuous unit packets including a MPEG transport packet, and
reproducing the video data composed of unit packets including a MPEG transport packet,
wherein, in the step of recording the video data, a transport packet including a PAT (program association table) and a transport packet including a PMT (program map table) are recorded at a predetermined interval and at a predetermined position prior to a transport packet including a sequence header in the video data, and
in the step of reproducing the video data, when reproducing is carried out from the sequence header included in the video data, reproduction of the transport packet including the PAT and the transport packet including the PMT and later is carried out.

65. An AV data recording/reproducing method, comprising the steps of:
inputting a transport packet;
generating management information concerning the transport packet;
recording the transport packet and the management information;
reading out the transport packet and the management information concerning the transport packet from a recording medium; and
starting output with a transport packet including at least a part of a sequence header by referring to the management information,
wherein the management information includes positional information of the transport packet including a PAT (program association table) that has been input in the recent past traced back from the transport packet including a PMT (program map table) that has been input in the recent past traced back from a transport packet including a PCR that has been input in the recent past with respect to the transport packet including at least a part of a sequence header,
in the step of reading out the management information, reference is made to the positional information in the management information before outputting the transport packet so as to read out the transport packet including the PAT and the transport packet including the PMT, and
in the step of starting the output, the transport packet including the PAT, the transport packet including the PMT and a transport packet including a PCR are output before outputting the transport packet including the sequence header.

66. An AV data recording/reproducing method, comprising the steps of:
inputting a transport packet;
generating management information concerning the transport packet;
recording the transport packet and the management information;
reading out the transport packet and the management information concerning the transport packet from a recording medium; and
starting output with a transport packet including a sequence header by referring to the management information,
wherein the management information includes positional information of the transport packet including a first PMT (program map table) that has been input a predetermined time period before the transport packet including the sequence header, and positional information of the transport packet that has been input after the transport packet including the sequence header,
in the step of reading out the management information, reference is made to the positional information in the management information before outputting the transport packet so as to read out at least the transport packets including a PAT and a PMT that are included in transport packets from a transport packet to be output predetermined time period before to the transport packet including the sequence header, and
in the step of starting the output, the transport packets including the PAT and the PMT are output before outputting the transport packet including the sequence header.

67. An AV data recording/reproducing method, comprising the steps of:
inputting a transport packet;
generating management information from information concerning the transport packet;
recording the transport packet and the management information;
reading out the transport packet and the management information concerning the transport packet from a recording medium; and
starting output with a transport packet including a sequence header by referring to the management information,
wherein the management information includes positional information of the transport packet including a first PMT (program map table) that has been input after the transport packet including at least a part of a sequence header and positional information of the transport packet including a first PAT (program association table) that has been input after the transport packet including the sequence header,
in the step of reading out the management information, reference is made to the positional information in the management information so as to read out the transport packet including a PAT and the transport packet including a PMT, and
in the step of starting the output, the transport packet including the PAT and the transport packet including the PMT are output before outputting the transport packet including the sequence header.

68. An AV data recording/reproducing method, comprising the steps of:
recording audio data as data composed of continuous unit packets including a MPEG transport packet; and
reproducing the audio data composed of a MPEG transport packet, recorded on a recording medium;
wherein the audio data includes a transport packet including a PAT (program association table) and a transport packet including a PMT (program map table) at a predetermined position with respect to transport packets including a predetermined number of audio frames, and
when reproduction is carried out from a head of the audio frame included in the audio data, the reproduction from the transport packet including the PAT and the transport packet including the PMT and later is carried out.

69. An AV data recording/reproducing method, comprising the steps of:
inputting a transport packet;
generating management information concerning the transport packet;
recording the transport packet and the management information;
reading out the transport packet and the management information concerning the transport packet from a recording medium; and
starting output with a transport packet corresponding to a designated output starting time by referring to the management information,
wherein the management information includes positional information of a leading transport packet in a group consisting of a plurality of the transport packets and the number of decoding units included in the group and output elapsed time information on the group, and
in the step of starting the output, an output starting position is specified from the designated output starting time by referring to the number of decoding units or the output elapsed time information and transport packets at the output starting position and later are output.

70. A data structure composed of continuous unit packets including a MPEG transport packet that includes video data,
wherein a transport packet including a sequence header in the video data includes a PCR (program clock reference), and
a transport packet including a PAT (program association table) and a transport packet including a PMT (program map table) are included at a predetermined interval and at a predetermined position prior to the transport packet including a sequence header.

71. A data structure comprising management information concerning a MPEG transport packet containing video data and audio data, comprising positional information of the transport packet including a PAT (program association table) that has been input in the recent past traced back from the transport packet including a PMT (program map table) that has been input in the recent past traced back from a transport packet including a PCR that has been input in the recent past with respect to the transport packet including at least a part of a sequence header.

72. A data structure comprising management information concerning a MPEG transport packet including input video data and/or audio data,
wherein the management information includes positional information of the transport packet that has been input within a predetermined time period.

73. A data structure composed of continuous unit packets including a MPEG transport packet that includes audio data,
wherein a transport packet including a PAT (program association table) and a transport packet including a PMT (program map table) are included at a predetermined position prior to transport packets including a predetermined number of audio frames, and
a PCR (program clock reference) is included at a predetermined position prior to a head of the transport packets including the predetermined number of audio frames.

74. A data structure comprising management information concerning a MPEG transport packet including N pieces of video in parallel,
wherein the management information includes positional information of the transport packet in which a sequence header that is included in the N pieces of video is stored.

75. A recording medium subjected to recording by means of the AV data recording apparatus according to any one of claims 1 to 23.

76. A recording medium subjected to recording by means of the AV data recording/reproducing apparatus according to any one of claims 37 to 42.

77. A recording medium subjected to recording using the AV data recording method according to any one of claims 43 to 52.

78. A recording medium subjected to recording using the AV data recording/reproducing method according to any one of claims 64 to 69.
